# EUROPÄISCHE PATENTSCHRIFT

(11) **EP 4 053 805 B1**
(45) Veröffentlichungstag und Bekanntmachung des Hinweises auf die Patenterteilung: **09.12.2026**
(21) Anmeldenummer: 21200420.4
(22) Anmeldetag: 01.10.2021
(51) Int. Cl.: G06V 20/69

(54) **ZELLZÄHLUNG ODER ZELLKONFLUENZ MIT RESKALIERTEN EINGABEBILDERN**
CELL COUNT OR CELL CONFLUENCE WITH RESCALED INPUT IMAGES
COMPTAGE DE CELLULES OU CONFLUENCE DE CELLULE À DES IMAGES D'ENTRÉE REMISES À L'ÉCHELLE

(30) Priorität: 02.03.2021 DE 102021105020
(43) Veröffentlichungstag der Anmeldung: 07.09.2022
(60) Teilanmeldung: 26215369.5
(73) Patentinhaber: Carl Zeiss Microscopy GmbH, 07745 Jena (DE)
(72) Erfinder: AMTHOR, Manuel, 07745 Jena (DE); HAASE, Daniel, 07751 Zöllnitz (DE); GÖGLER, Michael, 82515 Wolfratshausen (DE)
(74) Vertreter: Kraus & Lederer PartGmbB

(56) Entgegenhaltungen:
- HOLLANDI REKA ET AL: "nucleAIzer: A Parameter-free Deep Learning Framework for Nucleus Segmentation Using Image Style Transfer", CELL SYSTEMS, vol. 10, no. 5, May 2020 (2020-05-01), US, pages 453 - 458.e6, XP055899833, ISSN: 2405-4712, DOI: 10.1016/j.cels.2020.04.003
- FLORIAN KROMP ET AL: "Deep Learning architectures for generalized immunofluorescence based nuclear image segmentation", ARXIV.ORG, CORNELL UNIVERSITY LIBRARY, 201 OLIN LIBRARY CORNELL UNIVERSITY ITHACA, NY 14853, 30 July 2019 (2019-07-30), XP081955618
- KO BYOUNGCHUL ET AL: "Image resizing using saliency strength map and seam carving for white blood cell analysis", BIOMEDICAL ENGINEERING ONLINE, BIOMED CENTRAL LTD, LONDON, GB, vol. 9, no. 1, 20 September 2010 (2010-09-20), pages 54, XP021077697, ISSN: 1475-925X, DOI: 10.1186/1475-925X-9-54
- NICOLAS JACCARD ET AL: "Automated method for the rapid and precise estimation of adherent cell culture characteristics from phase contrast microscopy images", BIOTECHNOLOGY AND BIOENGINEERING, JOHN WILEY, HOBOKEN, USA, vol. 111, no. 3, 5 October 2013 (2013-10-05), pages 504 - 517, XP071114099, ISSN: 0006-3592, DOI: 10.1002/BIT.25115
- MARC-OLIVIER BARADEZ ET AL: "The Use of Multidimensional Image-Based Analysis to Accurately Monitor Cell Growth in 3D Bioreactor Culture", PLOS ONE, vol. 6, no. 10, 20 October 2011 (2011-10-20), pages e26104, XP055485369, DOI: 10.1371/journal.pone.0026104
- XUE YAO ET AL: "Cell Counting by Regression Using Convolutional Neural Network", COMPUTER VISION – ECCV 2016 WORKSHOPS, 18 September 2016 (2016-09-18), Cham, pages 274 - 290, XP055940344, ISBN: 978-3-319-46604-0, Retrieved from the Internet <URL:https://link.springer.com/content/pdf/10.1007/978-3-319-46604-0_20.pdf> [retrieved on 20220708], DOI: 10.1007/978-3-319-46604-0

## Beschreibung

### TECHNISCHES GEBIET

Verschiedene Beispiele der Erfindung betreffen Techniken zum Auswerten von lichtmikroskopischen Bildern, die Zellen abbilden. Zum Beispiel kann eine Anzahl von Zellen und/oder ein Konfluenzgrad geschätzt werden.

### HINTERGRUND

Bei der Untersuchung von Zellkulturen ist es häufig notwendig, bestimmte Eigenschaften der Probe zu quantifizieren. Beispielsweise kann es erforderlich sein, eine Schätzung der Anzahl der Zellen zu bestimmen oder eine Schätzung eines Konfluenzgrads der Zellen zu bestimmen. Der Konfluenzgrad bezeichnet dabei den Anteil der von Zellen bedeckten Probenfläche.

Oftmals wird eine Schätzung des Konfluenzgrads durch einfache optische Abschätzung eines Benutzers anhand von lichtmikroskopischen Bildern (Mikroskopiebildern) bestimmt. Eine solche Schätzung ist ungenau. Außerdem ist es schwierig, eine zeitliche Veränderung zu quantifizieren.

Die Anzahl der Zellen kann zum Beispiel im Sichtfeld des Mikroskops bestimmt werden oder aber auch im gesamten Probenbereich. Dazu kann vom Benutzer die Anzahl der Zellen händisch gezählt werden, was aufwendig, zeitintensiv und fehleranfällig ist.

Manuelle Techniken zum Bestimmen einer Schätzung der Anzahl und/oder des Konfluenzgrads der Zellen weisen bestimmte Nachteile auf: beispielsweise kann eine solche manuelle Schätzung vergleichsweise zeitintensiv sein. Das kann manchmal problematisch sein, weil während eines entsprechenden Experiments in Reaktion auf eine Änderung der Anzahl und/oder des Konfluenzgrads der Zellen bestimmte Aktionen zur Interaktion mit der Zellkultur erforderlich sein können.

Es sind auch automatisierte Techniken zum Bestimmen einer Schätzung der Anzahl und/oder eines Konfluenzgrads der Zellen bekannt. Dabei kann zum Beispiel ein Schwellenwert für den Kontrast eines lichtmikroskopischen Bilds bestimmt werden und dann für jeden Bildpunkt der jeweilige Kontrast mit dem Schwellenwert verglichen werden, um zu bestimmen, ob der jeweilige Bildpunkt eine Zelle abbildet oder Hintergrund abbildet.

Häufig ist es bei solchen Schwellenwert-basierten Techniken zum Bestimmen der Schätzung der Anzahl und/oder des Konfluenzgrads der Zellen notwendig, dass Parameterwerte des entsprechenden Auswertungsalgorithmus vom Benutzer geeignet eingestellt werden. Ein solches Parametrisieren des Auswertungsalgorithmus kann Expertenwissen erfordern und damit fehleranfällig sein. Außerdem wird der Analysevorgang dadurch verlangsamt.

Zum relevanten Stand der Technik gehören:
HOLLANDI REKA ET AL: "nucleAlzer: A Parameter-free Deep Learning Framework for Nucleus Segmentation Using Image Style Transfer",CELL SYSTEMS, Bd. 10, Nr. 5, Mai 2020 (2020-05), Seiten 453-458.e6, XP055899833, US, ISSN: 2405-4712, DOI: 10.1016/j.cels.2020.04.003;
   und
FLORIAN KROMP ET AL: "Deep Learning architectures for generalized immunofluorescence based nuclear image segmentation",ARXIV.ORG, CORNELL UNIVERSITY LIBRARY, 201 OLIN LIBRARY CORNELL UNIVERSITY ITHACA, NY 14853, 30. Juli 2019 (2019-07-30), XP081955618.

### ZUSAMMENFASSUNG

Deshalb besteht ein Bedarf für verbesserte Techniken zur Auswertung von Mikroskopiebildern die Zellen abbilden betreffend ein oder mehrere Observablen, die mit den Zellen assoziiert sind.

Diese Aufgabe wird gelöst von den Merkmalen der unabhängigen Ansprüche. Die Merkmale der abhängigen Ansprüche definieren Ausführungsformen.

Ein Computer-implementiertes Verfahren umfasst das Erhalten eines lichtmikroskopischen Bilds. Dieses bildet eine Vielzahl von Zellen ab. Das Verfahren umfasst ferner das Anpassen einer Größe des lichtmikroskopischen Bilds, sodass eine Größe einer vorgegebenen Zellstruktur der Vielzahl von Zellen einem vorgegebenen Referenzwert entspricht. Außerdem umfasst das Verfahren das Bestimmen einer Schätzung der Anzahl der Zellen basierend auf dem lichtmikroskopischen Bild; alternativ oder zusätzlich umfasst das Verfahren das Bestimmen einer Schätzung eines Konfluenzgrads der Zellen.

Ein Computerprogramm oder ein Computerprogramm-Produkt oder ein Computerlesbare Speichermedium umfasst Programmcode. Der Programmcode kann von einem Prozessor geladen und ausgeführt werden. Wenn der Prozessor den Programmcode ausführt, bewirkt dies, dass der Prozessor ein Verfahren ausführt. Das Verfahren umfasst das Erhalten eines lichtmikroskopischen Bilds. Dieses bildet eine Vielzahl von Zellen ab. Das Verfahren umfasst ferner das Anpassen einer Größe des lichtmikroskopischen Bilds, sodass eine Größe einer vorgegebenen Zellstruktur der Vielzahl von Zellen einem vorgegebenen Referenzwert entspricht. Außerdem umfasst das Verfahren das Bestimmen einer Schätzung der Anzahl der Zellen basierend auf dem lichtmikroskopischen Bild; altemativ oder zusätzlich umfasst das Verfahren das Bestimmen einer Schätzung eines Konfluenzgrads der Zellen.

Eine Vorrichtung umfasst einem Prozessor. Der Prozessor ist eingerichtet, ein lichtmikroskopisches Bild zu erhalten. Das lichtmikroskopische Bild bildet eine Vielzahl von Zellen ab. Der Prozessor ist außerdem eingerichtet, eine Größe des lichtmikroskopischen Bilds anzupassen, so dass eine Größe einer vorgegebenen Zellstruktur der Vielzahl von Zellen einem vorgegebenen Referenzwert entspricht. Ferner ist der Prozessor eingerichtet, eine Schätzung der Anzahl der Zellen basierend auf dem lichtmikroskopischen Bild zu bestimmen. Alternativ oder zusätzlich ist der Prozessor eingerichtet, eine Schätzung eines Konfluenzgrads der Zellen zu bestimmen.

Ein Computer-implementiertes Verfahren umfasst das Erhalten eines lichtmikroskopischen Bilds. Das lichtmikroskopische Bild bildet eine Vielzahl von Zellen ab. Außerdem umfasst das Verfahren das Bestimmen einer Schätzung der Anzahl der Zellen und des Konfluenzgrads der Zellen basierend auf dem lichtmikroskopischen Bild. Das Verfahren umfasst ferner das Durchführen einer Kreuz-Plausibilisierung der Schätzung der Anzahl der Zellen und der Schätzung des Konfluenzgrads der Zellen.

Ein Computerprogramm oder ein Computerprogramm-Produkt oder ein Computerlesbare Speichermedium umfasst Programmcode. Der Programmcode kann von einem Prozessor geladen und ausgeführt werden. Wenn der Prozessor den Programmcode ausführt, bewirkt dies, dass der Prozessor ein Verfahren ausführt. Das Verfahren umfasst das Erhalten eines lichtmikroskopischen Bilds. Das lichtmikroskopische Bild bildet eine Vielzahl von Zellen ab. Außerdem umfasst das Verfahren das Bestimmen einer Schätzung der Anzahl der Zellen und des Konfluenzgrads der Zellen basierend auf dem lichtmikroskopischen Bild. Das Verfahren umfasst ferner das Durchführen einer Kreuz-Plausibilisierung der Schätzung der Anzahl der Zellen und der Schätzung des Konfluenzgrads der Zellen.

Eine Vorrichtung umfasst einem Prozessor. Der Prozessor ist eingerichtet, ein lichtmikroskopische Bild zu erhalten, welches eine Vielzahl von Zellen abbildet. Außerdem ist der Prozessor eingerichtet, eine Schätzung der Anzahl der Zellen sowie des Konfluenzgrads der Zellen basierend auf dem lichtmikroskopischen Bild zu bestimmen. Außerdem ist der Prozessor eingerichtet, um eine Kreuz-Plausibilisierung der Schätzung der Anzahl der Zellen und der Schätzung des Konfluenzgrads der Zellen durchzuführen.

Ein Computer-implementiertes Verfahren umfasst das Erhalten eines lichtmikroskopischen Bilds. Das lichtmikroskopische Bild bildet eine Vielzahl von Zellen mehrerer Zellarten ab. Außerdem umfasst das Computer-implementierte Verfahren das Bestimmen mehrerer Dichtekarten für das lichtmikroskopische Bild unter Verwendung von mehreren maschinengelernten Verarbeitungspfaden mindestens eines maschinengelernten Algorithmus. Die mehreren Verarbeitungspfade sind dabei den mehreren Zellarten zugeordnet. Die mehreren Dichtekarten kodieren jeweils eine Wahrscheinlichkeit für die Anwesenheit oder die Abwesenheit von Zellen einer entsprechenden Zellart. Das Verfahren umfasst ferner das Bestimmen einer Schätzung einer Anzahl der jeweiligen Zellen und/oder eines Konfluenzgrads der jeweiligen Zellen basierend auf den mehreren Dichtekarten und für jede der mehreren Zellarten.

Ein Computerprogramm oder ein Computerprogramm-Produkt oder ein Computer-lesbares Speichermedium umfasst Programmcode. Der Programmcode kann von einem Prozessor geladen und ausgeführt werden. Wenn der Prozessor dem Programmcode ausführt, bewirkt dies, dass der Prozessor ein Verfahren ausführt. Das Verfahren umfasst das Erhalten eines lichtmikroskopischen Bilds. Das lichtmikroskopische Bild bildet eine Vielzahl von Zellen mehrerer Zellarten ab. Außerdem umfasst das Computer-implementierte Verfahren das Bestimmen mehrerer Dichtekarten für das lichtmikroskopische Bild unter Verwendung von mehreren maschinengelernten Verarbeitungspfaden mindestens eines maschinengelernten Algorithmus. Die mehreren Verarbeitungspfade sind dabei den mehreren Zellarten zugeordnet. Die mehreren Dichtekarten kodieren jeweils eine Wahrscheinlichkeit für die Anwesenheit oder die Abwesenheit von Zellen einer entsprechenden Zellart. Das Verfahren umfasst ferner das Bestimmen einer Schätzung einer Anzahl der jeweiligen Zellen und/oder eines Konfluenzgrads der jeweiligen Zellen basierend auf den mehreren Dichtekarten und für jede der mehreren Zellarten.

Eine Vorrichtung umfasst einem Prozessor. Der Prozessor ist eingerichtet, um ein lichtmikroskopisches Bild zu erhalten, welches eine Vielzahl von Zellen mehrerer Zellarten abbildet. Außerdem ist der Prozessor eingerichtet, um mehrere Dichtekarten für das lichtmikroskopische Bild unter Verwendung von mehreren maschinengelernten Verarbeitungspfaden mindestens eines maschinengelernten Algorithmus zu bestimmen. Dabei sind die mehreren Verarbeitungspfade den mehreren Zellarten zugeordnet. Die mehreren Dichtekarten kodieren jeweils eine Wahrscheinlichkeit für die Anwesenheit oder die Abwesenheit von Zellen einer entsprechenden Zellart. Der Prozessor ist außerdem eingerichtet, um basierend auf den mehreren Dichtekarten und für jede der mehreren Zellarten eine entsprechende Schätzung einer Anzahl und/oder eines Konfluenzgrads der jeweiligen Zellen zu bestimmen.

Ein Computer-implementiertes Verfahren umfasst das Erhalten eines lichtmikroskopischen Bilds. Dieses bildet eine Vielzahl von Zellen mehrerer Zellarten ab. Außerdem umfasst das Verfahren das Bestimmen einer aggregierten Dichtekarte für das lichtmikroskopische Bild unter Verwendung mindestens eines maschinengelernten Algorithmus. Die aggregierte Dichtekarte kodiert für jede Zellart eine Wahrscheinlichkeit für die Anwesenheit oder die Abwesenheit von entsprechenden Zellen durch einen entsprechenden Wertebereich. Außerdem umfasst das Verfahren basierend auf der aggregierten Dichtekarte für jede der mehreren Zellarten das Bestimmen einer Schätzung einer Anzahl und/oder eines Konfluenzgrads der jeweiligen Zellen.

Ein Computerprogramm oder ein Computerprogramm-Produkt oder ein Computer-lesbares Speichermedium umfasst Programmcode. Der Programmcode kann von einem Prozessor geladen und ausgeführt werden. Wenn der Prozessor dem Programmcode ausführt, bewirkt dies, dass der Prozessor ein Verfahren ausführt. Das Verfahren umfasst das Erhalten eines lichtmikroskopischen Bilds. Dieses bildet eine Vielzahl von Zellen mehrerer Zellarten ab. Außerdem umfasst das Verfahren das Bestimmen einer aggregierten Dichtekarte für das lichtmikroskopische Bild unter Verwendung mindestens eines maschinengelernten Algorithmus. Die aggregierte Dichtekarte kodiert für jede Zellart eine Wahrscheinlichkeit für die Anwesenheit oder die Abwesenheit von entsprechenden Zellen durch einen entsprechenden Wertebereich. Außerdem umfasst das Verfahren basierend auf der aggregierten Dichtekarte für jede der mehreren Zellarten das Bestimmen einer Schätzung einer Anzahl und/oder eines Konfluenzgrads der jeweiligen Zellen.

Eine Vorrichtung umfasst einem Prozessor. Der Prozessor ist eingerichtet, um ein lichtmikroskopisches Bild zu erhalten, welches eine Vielzahl von Zellen mehrerer Zellarten abbildet. Außerdem ist der Prozessor eingerichtet, um eine aggregierte Dichtekarte für das lichtmikroskopische Bild zu bestimmen, unter Verwendung von mindestens einem maschinengelernten Algorithmus. Die aggregierte Dichtekarte kodiert für jede Zellart eine Wahrscheinlichkeit für die Anwesenheit oder die Abwesenheit von entsprechenden Zellen durch einen entsprechenden Wertebereich. Außerdem ist der Prozessor eingerichtet, um eine Schätzung einer Anzahl und/oder eines Konfluenzgrads der jeweiligen Zellen basierend auf der aggregierten Dichtekarte für jede der mehreren Zellarten zu bestimmen.

Ein Computer-implementiertes Verfahren umfasst das Erhalten eines lichtmikroskopischen Bilds, welches eine Vielzahl von Zellen mehrerer Zellarten abbildet. Das Verfahren umfasst ferner das Bestimmen einer Dichtekarte für das lichtmikroskopische Bild unter Verwendung eines ersten maschinengelernten Verarbeitungspfads, wobei die Dichtekarte eine Wahrscheinlichkeit für die Anwesenheit oder die Abwesenheit von Zellen unabhängig von der Zellart kodiert. Außerdem umfasst das Verfahren das Bestimmen der Zellarten für die Zellen der Vielzahl von Zellen basierend auf dem lichtmikroskopischen Bild unter Verwendung eines zweiten maschinengelernten Verarbeitungspfads. Das Verfahren umfasst ferner das Kennzeichnen der Zellarten in der Dichtekarte; sowie basierend auf der Dichtekarte und dem Kennzeichnen und für jede der mehreren Zellarten, das Bestimmen einer Schätzung einer Anzahl und/oder eines Konfluenzgrads der jeweiligen Zellen. Ein Computerprogramm oder ein Computerprogramm-Produkt oder ein Computer-lesbares Speichermedium umfasst Programmcode. Der Programmcode kann von einem Prozessor geladen und ausgeführt werden. Wenn der Prozessor dem Programmcode ausführt, bewirkt dies, dass der Prozessor ein Verfahren ausführt. Das Verfahren umfasst das Erhalten eines lichtmikroskopischen Bilds, welches eine Vielzahl von Zellen mehrerer Zellarten abbildet. Das Verfahren umfasst ferner das Bestimmen einer Dichtekarte für das lichtmikroskopische Bild unter Verwendung eines ersten maschinengelernten Verarbeitungspfads, wobei die Dichtekarte eine Wahrscheinlichkeit für die Anwesenheit oder die Abwesenheit von Zellen unabhängig von der Zellart kodiert. Außerdem umfasst das Verfahren das Bestimmen der Zellarten für die Zellen der Vielzahl von Zellen basierend auf dem lichtmikroskopischen Bild unter Verwendung eines zweiten maschinengelernten Verarbeitungspfads. Das Verfahren umfasst ferner das Kennzeichnen der Zellarten in der Dichtekarte; sowie basierend auf der Dichtekarte und dem Kennzeichnen und für jede der mehreren Zellarten, das Bestimmen einer Schätzung einer Anzahl und/oder eines Konfluenzgrads der jeweiligen Zellen.

Eine Vorrichtung umfasst einem Prozessor. Der Prozessor ist eingerichtet, um ein lichtmikroskopisches Bild zu erhalten, welches eine Vielzahl von Zellen mehrerer Zellarten abbildet. Außerdem ist der Prozessor eingerichtet, um eine Dichtekarte für das lichtmikroskopische Bild zu bestimmen, unter Verwendung von mindestens einem maschinengelernten Algorithmus. Diese Dichtekarte kodiert die Wahrscheinlichkeit für die Anwesenheit oder die Abwesenheit von Zellen unabhängig von der Zellart. Der Prozessor ist außerdem eingerichtet, um die Zellarten für die Zellen der Vielzahl von Zellen basierend auf dem lichtmikroskopischen Bild zu bestimmen, und zwar unter Verwendung eines zweiten maschinengelernten Verarbeitungspfads. Der Prozessor ist ferner eingerichtet, um die Zellarten in der Dichtekarte zu kennzeichnen. Außerdem ist der Prozessor eingerichtet, um basierend auf der Dichtekarte und dem Kennzeichnen und für jede der mehreren Zellarten eine Schätzung einer Anzahl und/oder eines Konfluenzgrads der jeweiligen Zellen zu bestimmen.

Ein Computer-implementiertes Verfahren umfasst das Erhalten eines lichtmikroskopischen Bilds, welches eine Vielzahl von Zellen mehrerer Zellarten abbildet. Außerdem umfasst das Computer-implementierte Verfahren das Bestimmen einer Dichtekarte für das lichtmikroskopische Bild unter Verwendung von mindestens einem maschinengelernten Algorithmus. Die Dichtekarte kodiert dabei eine Wahrscheinlichkeit für die Anwesenheit oder die Abwesenheit von Zellen unabhängig von der Zellart. Außerdem umfasst das Verfahren das Ermitteln von Positionen der Zellen basierend auf der Dichtekarte und das Bestimmen von Bildausschnitten des lichtmikroskopischen Bilds basierend auf den Positionen der Zellen. Das Verfahren umfasst für jeden Bildausschnitt das Klassifizieren der jeweiligen Zelle zum Bestimmen der jeweiligen Zellart und das Kennzeichnen der Zellarten in der Dichtekarte. Außerdem umfasst das Verfahren das Bestimmen einer Schätzung einer Anzahl und/oder eines Konfluenzgrads der jeweiligen Zellen, basierend auf der Dichtekarte und dem Kennzeichnen, sowie für jede der mehreren Zellarten.

Ein Computerprogramm oder ein Computerprogramm-Produkt oder ein Computer-lesbares Speichermedium umfasst Programmcode. Der Programmcode kann von einem Prozessor geladen und ausgeführt werden. Wenn der Prozessor dem Programmcode ausführt bewirkt dies, dass der Prozessor ein Verfahren ausführt. Das Verfahren umfasst das Erhalten eines lichtmikroskopischen Bilds, welches eine Vielzahl von Zellen mehrerer Zellarten abbildet. Außerdem umfasst das Computer-implementierte Verfahren das Bestimmen einer Dichtekarte für das lichtmikroskopische Bild unter Verwendung von mindestens einem maschinengelernten Algorithmus. Die Dichtekarte kodiert dabei eine Wahrscheinlichkeit für die Anwesenheit oder die Abwesenheit von Zellen unabhängig von der Zellart. Außerdem umfasst das Verfahren das Ermitteln von Positionen der Zellen basierend auf der Dichtekarte und das Bestimmen von Bildausschnitten des lichtmikroskopischen Bilds basierend auf den Positionen der Zellen. Das Verfahren umfasst für jeden Bildausschnitt das Klassifizieren der jeweiligen Zelle zum Bestimmen der jeweiligen Zellart und das Kennzeichnen der Zellarten in der Dichtekarte. Außerdem umfasst das Verfahren das Bestimmen einer Schätzung einer Anzahl und/oder eines Konfluenzgrads der jeweiligen Zellen, basierend auf der Dichtekarte und dem Kennzeichnen, sowie für jede der mehreren Zellarten.

Eine Vorrichtung umfasst einem Prozessor. Der Prozessor ist eingerichtet, um ein lichtmikroskopisches Bild zu erhalten. Das lichtmikroskopische Bild bildet eine Vielzahl von Zellen mehrerer Zellarten ab. Der Prozessor ist außerdem eingerichtet, um eine Dichtekarte für das lichtmikroskopische Bild zu bestimmen, unter Verwendung von mindestens einem maschinengelernten Algorithmus. Die Dichtekarte kodiert eine Wahrscheinlichkeit für die Anwesenheit oder die Abwesenheit von Zellen unabhängig von der Zellart. Der Prozessor ist außerdem eingerichtet, um Positionen der Zellen basierend auf der Dichtekarte zu ermitteln und Bildausschnitte des lichtmikroskopischen Bilds basierend auf den Positionen der Zellen zu bestimmen. Der Prozessor ist außerdem eingerichtet, die jeweilige Zelle für jeden Bildausschnitt zum Bestimmen der jeweiligen Zellart zu klassifizieren. Der Prozessor ist ferner eingerichtet, um die Zellarten in der Dichtekarte zu kennzeichnen und basierend auf der Dichtekarte, dem Kennzeichnen und für jede der mehreren Zellarten eine Schätzung einer Anzahl und/oder eines Konfluenzgrads der jeweiligen Zellen zu bestimmen.

Ein Computer-implementiertes Verfahren umfasst das Erhalten eines lichtmikroskopischen Bilds mit mehreren Kanälen. Die mehreren Kanäle bilden jeweils eine Vielzahl von Zellen mit einem jeweiligen Kontrast ab. Zumindest ein Referenz-Kanal der mehreren Kanäle umfasst ein jeweiliges Fluoreszenzbild, welches die Vielzahl von Zellen mit einem Kontrast abbildet, der spezifisch für eine jeweilige fluoreszierende Zellstruktur ist. Das Verfahren umfasst ferner das automatische Bestimmen einer Dichtekarte und/oder einer Konfluenzkarte basierend auf den Fluoreszenzbildern des mindestens einen Referenz-Kanals. Die Dichtekarte kodiert eine Wahrscheinlichkeit für die Anwesenheit oder die Abwesenheit von Zellen. Die Konfluenzkarte maskiert Konfluenzregionen. Das Verfahren umfasst ferner das Trainieren mindestens eines maschinengelernten Algorithmus basierend auf einem Trainings-Kanal der mehreren Kanäle als Trainingseingabe und der Dichtekarte und/oder der Konfluenzkarte als Grundwahrheit.

Ein Computerprogramm oder ein Computerprogramm-Produkt oder ein computerlesbares Speichermedium umfasst Programmcode. Der Programmcode kann von einem Prozessor geladen und ausgeführt werden. Wenn der Prozessor dem Programmcode ausführt, bewirkt dies, dass der Prozessor ein Verfahren ausführt. Das Verfahren umfasst das Erhalten eines lichtmikroskopischen Bilds mit mehreren Kanälen. Die mehreren Kanäle bilden jeweils eine Vielzahl von Zellen mit einem jeweiligen Kontrast ab. Zumindest ein Referenz-Kanal der mehreren Kanäle umfasst ein jeweiliges Fluoreszenzbild, welches die Vielzahl von Zellen mit einem Kontrast abbildet, der spezifisch für eine jeweilige fluoreszierende Zellstruktur ist. Das Verfahren umfasst ferner das automatische Bestimmen einer Dichtekarte und/oder einer Konfluenzkarte basierend auf den Fluoreszenzbildern des mindestens einen Referenz-Kanals. Die Dichtekarte kodiert eine Wahrscheinlichkeit für die Anwesenheit oder die Abwesenheit von Zellen. Die Konfluenzkarte maskiert Konfluenzregionen. Das Verfahren umfasst ferner das Trainieren mindestens eines maschinengelernten Algorithmus basierend auf einem Trainings-Kanal der mehreren Kanäle als Trainingseingabe und der Dichtekarte und/oder der Konfluenzkarte als Grundwahrheit.

Eine Vorrichtung umfasst einem Prozessor. Der Prozessor ist eingerichtet, um ein lichtmikroskopisches Bild mit mehreren Kanälen zu erhalten. Die mehreren Kanäle bilden jeweils eine Vielzahl von Zellen mit einem jeweiligen Kontrast ab. Zumindest ein Referenz-Kanal der mehreren Kanäle umfasst ein jeweiliges Fluoreszenzbild, welches die Vielzahl von Zellen mit einem Kontrast abbildet, der spezifisch für eine jeweilige fluoreszierende Zellstruktur ist. Der Prozessor ist weiterhin eingerichtet, um basierend auf den Fluoreszenzbildern des mindestens einen Referenz-Kanals automatisch eine Dichtekarte und/oder eine Konfluenzkarte zu bestimmen, wobei die Dichtekarte eine Wahrscheinlichkeit für die Anwesenheit oder die Abwesenheit von Zellen kodiert. Die Konfluenzkarte maskiert Konfluenzregionen. Der Prozessor ist eingerichtet, um mindestens einen maschinengelernten Algorithmus basierend auf einem Trainings-Kanal der mehreren Kanäle als Trainingseingabe und der Dichtekarte und/oder der Konfluenzkarte als Grundwahrheit zu trainieren.

Die oben dargelegten Merkmale und Merkmale, die nachfolgend beschrieben werden, können nicht nur in den entsprechenden explizit dargelegten Kombinationen verwendet werden, sondern auch in weiteren Kombinationen oder isoliert, ohne den Schutzumfang der vorliegenden Erfindung zu verlassen.

### KURZE BESCHREIBUNG DER FIGUREN

FIG. 1 illustriert schematisch eine Vorrichtung zur Datenverarbeitung im Zusammenhang mit der Auswertung von Mikroskopiebildern, die Zellen abbilden, gemäß verschiedenen Beispielen.
FIG. 2 ist ein Flussdiagramm eines beispielhaften Verfahrens.
FIG. 3 ist ein beispielhaftes Mikroskopiebild.
FIG. 4 ist eine beispielhafte Dichtekarte, die für das Mikroskopiebild aus FIG. 3 die Anwesenheit und Abwesenheit von Zellen kodiert.
FIG. 5 ist ein beispielhaftes Mikroskopiebild.
FIG. 6 ist eine beispielhafte Konfluenzkarte, die für das Mikroskopiebild aus FIG. 5 Konfluenzregionen maskiert.
FIG. 7 ist ein Flussdiagramm eines beispielhaften Verfahrens
FIG. 8 ist ein Flussdiagramm eines beispielhaften Verfahrens.
FIG. 9 ist ein Flussdiagramm eines beispielhaften Verfahrens.
FIG. 10 illustriert schematisch eine beispielhafte Datenverarbeitung zum Bestimmen einer Dichtekarte.
FIG. 11 illustriert schematisch eine beispielhafte Datenverarbeitung zum Bestimmen einer Dichtekarte.
FIG. 12 illustriert schematisch eine beispielhafte Datenverarbeitung zum Bestimmen einer Dichtekarte.
FIG. 13 illustriert schematisch eine beispielhafte Datenverarbeitung zum Bestimmen einer Dichtekarte.
FIG. 14 illustriert schematisch eine Datenverarbeitung zur Schätzung der Anzahl der Zellen und des Konfluenzgrads gemäß verschiedenen Beispielen.
FIG. 15 illustriert schematisch eine Datenverarbeitung zum Training eines ML Algorithmus zur Schätzung der Anzahl von Zellen gemäß verschiedenen Beispielen.

### DETAILLIERTE BESCHREIBUNG VON AUSFÜHRUNGSFORMEN

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Nachfolgend wird die vorliegende Erfindung anhand bevorzugter Ausführungsformen unter Bezugnahme auf die Zeichnungen näher erläutert. In den Figuren bezeichnen gleiche Bezugszeichen gleiche oder ähnliche Elemente. Die Figuren sind schematische Repräsentationen verschiedener Ausführungsformen der Erfindung. In den Figuren dargestellte Elemente sind nicht notwendigerweise maßstabsgetreu dargestellt. Vielmehr sind die verschiedenen in den Figuren dargestellten Elemente derart wiedergegeben, dass ihre Funktion und genereller Zweck dem Fachmann verständlich wird. In den Figuren dargestellte Verbindungen und Kopplungen zwischen funktionellen Einheiten und Elementen können auch als indirekte Verbindung oder Kopplung implementiert werden. Eine Verbindung oder Kopplung kann drahtgebunden oder drahtlos implementiert sein. Funktionale Einheiten können als Hardware, Software oder eine Kombination aus Hardware und Software implementiert werden.

Nachfolgend werden Techniken zur Auswertung von Mikroskopiebildern, die eine Vielzahl von Zellen abbilden, beschrieben. Gemäß den hierin beschriebenen Techniken können zum Beispiel Zellkulturen untersucht werden. Es können Eigenschaften der Zellen bzw. Zellkulturen quantifiziert werden.

Beispielsweise kann es mittels der hierin beschriebenen Techniken möglich sein, eine Schätzung der Anzahl der Zellen zu bestimmen. Alternativ oder zusätzlich kann auch eine Schätzung des Konfluenzgrads - d.h. Bedeckungsgrad der Probenfläche mit Zellen - der Zellen bestimmt werden.

Grundsätzlich können sich solche Schätzungen auf ein Sichtfeld der lichtmikroskopischen Bilder beziehen oder auf die gesamte Probe.

Die hierin beschriebenen Techniken ermöglichen insbesondere eine voll automatisierte oder zumindest teil-automatisierte Auswertung. Die hierin beschriebenen Techniken ermöglichen das Bestimmen von Schätzungen mit einer hohen Genauigkeit. Außerdem ist es mittels der hierin beschriebenen Techniken möglich, die Auswertung besonders recheneffizient durchzuführen. Damit kann zum Beispiel erreicht werden, dass die Auswertung auch auf mobilen Geräten durchgeführt wird, ohne dass ein Computer mit besonderer Hardware erforderlich wäre. Beispielsweise kann es möglich sein, die hierin beschriebenen Auswertungen auf einem integrierten Chip in einem Lichtmikroskop durchzuführen ("on-device" Implementierung).

In manchen Beispielen kann es vorkommen, dass ein lichtmikroskopisches Bild mehrere Zellarten abbildet. Unterschiedliche Zellarten können zum Beispiel durch Zellen unterschiedlichen Typs, z.B. Nervenzellen vs. Muskelzellen, gegeben sein. Unterschiedliche Zellarten können aber auch durch Zellen desselben Typs aber in unterschiedlichen Lebensstadien, zum Beispiel lebende Zellen vs. tote Zellen, gegeben sein. Unterschiedliche Zellarten können unterschiedliche Größen aufweisen.

Unterschiedliche Zellarten können auch in einer vordefinierten Hierarchie miteinander in Verbindung stehen. Zum Beispiel könnte auf einer obersten Hierarchieebene der vordefinierten unterschieden werden zwischen den Zellarten "normal" und "abgelöst"; auf der nächsttieferen Hierarchieebene kann dann für die Zellart "abgelöst" unterschieden werden zwischen "tot" und "Mitose", bzw. zwischen unterschiedlichen Zellzyklus-Stadien für lebende Zellen; auf der nächst tieferen Hierarchieebene kann für "tot" unterschieden werden zwischen "Nekrose" und "Apoptose". Das ist nur ein Beispiel und andere Zellarten und andere Hierarchien sind denkbar.

Adhärente Zellkulturen wachsen auf einem Substrat, Suspensionszellen schwimmen im wässrigen Medium. Die Zellen vermehren sich über die Zeit mittels Zellteilung. Sie sterben jedoch auch ab. Apoptotische Zellen, bereits tote Zellen aber auch mitotische Zellen können im Phasenkontrast oft nur sehr schwer unterschieden werden. Es gibt unterschiedliche Marker bzw. Färbungen, die eine Unterscheidung des Zellzustandes erlauben. Hier gibt es z.B. trypan blue zur Unterscheidung von lebenden und toten Zellen, aber auch Fluoreszenzmarker die tote oder apoptotische Zellen markieren. Zellen, die sich im Prozess der Zellteilung oder Mitose befinden, können ebenfalls über geeignete Marker identifiziert werden.

Unterschiedliche Zellarten können z.B. sein: abgelöst vs. nicht-abgelöst; lebend vs. tot; Mitose vs. Apoptose; Unterschiedliche Zelltypen

Gemäß den hierin beschriebenen Techniken ist es grundsätzlich möglich, eine Auswertung für die verschiedenen Zellarten durchzuführen. Insbesondere könnten zum Beispiel selektiv unterschiedliche quantitative Schätzungen für die verschiedenen Zellarten bestimmt werden.

Verschiedene hierin beschriebenen Beispiele beruhen auf der Verwendung von ein oder mehreren maschinengelernten (ML) Algorithmen zur Bestimmung von Schätzungen im Zusammenhang mit den Zellen. In den verschiedenen Beispielen können dabei unterschiedliche Typen von ML Algorithmen eingesetzt werden. Hier können zum Beispiel künstliche neuronale Netzwerke (KNNs) verwendet werden. Ein KNN umfasst eine Vielzahl von Schichten, die verschiedene Operationen ausführen. Ein Beispiel für ein KNN ist ein Faltungsnetzwerk (engl. convolutional neural network), bei denen Faltungsschichten verwendet werden, die eine Faltung von Eingangswerten mit einem Kern durchführen. Die verschiedenen Schichten können über geeignete Gewichte miteinander verbunden werden. Nichtlineare Aktivierungen sind denkbar. Pooling-Operationen können durchgeführt werden: dort werden Informationen verworfen. Ein Beispiel ist das Max-Pooling, wo nur die stärksten Werte eines Bereichs (z.B. 2x2 Neuronen) beibehalten werden. KNNs können eine Feedforward-Architektur haben. Hier wird das Ergebnis einer Schicht immer nur an eine weitere Schicht weitergegeben. Wenn sog. Sprung-Verbindungen vorhanden sind, kann die Ausgabe einer Schicht an mehrere nachfolgende Schichten weitergegeben werden. Es können grundsätzlich unterschiedliche Arten von KNNs verwendet werden, z.B. insbesondere auch Generative Adversarial Networks (GANs) oder Autoencoder Netzwerke, z.B. variational Autoencoder Netzwerke.

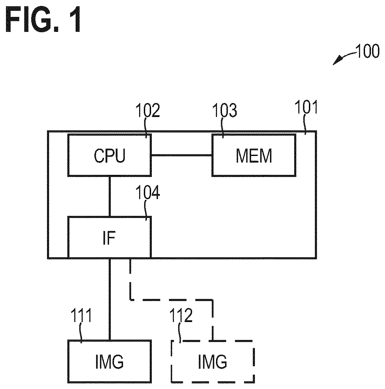

FIG. 1 illustriert schematisch ein System 100 gemäß verschiedenen Beispielen. Das System 100 umfasst eine Vorrichtung 101. Die Vorrichtung 101 dient der Auswertung von Mikroskopiebildern. Die Vorrichtung 101 könnte zum Beispiel ein Computer oder ein Server sein. Die Vorrichtung 101 umfasst einen Prozessor 102 und einen Speicher 103. Die Vorrichtung 101 umfasst auch eine Schnittstelle 104. Über die Schnittstelle 104 kann die Vorrichtung 101 Bilddaten, zum Beispiel Mikroskopiebilder, von ein oder mehreren Bildgebungsvorrichtungen 111, 112 empfangen. Der Prozessor 102 könnte auch Steuerdaten über die Schnittstelle 104 an die ein oder mehreren Bildgebungsvorrichtungen 111, 112 senden, um diese zur Erfassung von Bilddaten anzusteuern. Mittels der Steuerdaten könnte der Prozessor 102 auch die Werte von ein oder mehreren Bildgebungsparametern, zum Beispiel von Beleuchtungsparametern, einstellen.

Der Prozessor 102 kann, allgemein formuliert, eingerichtet sein, um Steueranweisungen aus dem Speicher 103 zu laden und auszuführen. Wenn der Prozessor 102 die Steueranweisungen lädt und ausführt, bewirkt dies, dass der Prozessor 102 Techniken ausführt, wie sie hierin beschrieben sind. Solche Techniken werden zum Beispiel das Ansteuern der Bildgebungsvorrichtung 111 und optional der Bildgebungsvorrichtung 112, um Bilddaten zu erfassen. Zum Beispiel könnte der Prozessor 102 eingerichtet sein, um die Bildgebungsvorrichtung 111 anzusteuern, um mittels mikroskopischer Bildgebung während eines Beobachtungszeitraums mehrere Mikroskopiebilder einer Probe zu erfassen. Der Prozessor 102 kann eingerichtet sein, um eine Schätzung einer Anzahl und/oder eines Konfluenzgrads von Zellen zu bestimmen. Der Prozessor 102 kann eingerichtet sein, um einen ML Algorithmus zu trainieren, basierend auf Trainingsdaten und Labeln, die Vorwissen bezeichnen.

Grundsätzlich können unterschiedliche Bildgebungsmodalitäten für die auszuwertenden Mikroskopiebilder in den hierin beschriebenen Beispielen verwendet werden. Diese unterschiedlichen Bildgebungsmodalitäten können von einer oder mehreren Bildgebungsvorrichtungen wie den Bildgebungsvorrichtungen 111, 112 implementiert werden. Beispielhafte Bildgebungsmodalitäten betreffen zum Beispiel Durchlicht-Kontrast (ohne Fluoreszenz). Zum Beispiel könnte insbesondere einen Phasenkontrast verwendet werden. Es könnte ein Weitfeld-Kontrast verwendet werden. Es könnte auch ein Hellfeld-Kontrast verwendet werden. Eine weitere Bildgebungsmodalität stellt einen Fluoreszenz-Kontrast bereit. Zum Beispiel könnte ein FluoreszenzMarker verwendet werden, um bestimmte Zellstrukturen spezifisch zu färben. Zum Beispiel könnte der Zellkern oder das Zellskelett gefärbt werden. Es sind auch digitale Bildkontrast als Bildgebungsmodalität denkbar. Zum Beispiel könnte mittels schräger Beleuchtung ein digitaler Phasenkontrast erzeugt werden. Es wäre möglich, dass der digitale Bildkontrast in Abhängigkeit von der gewünschten Auswertung angepasst wird. Manchmal können unterschiedliche Kontraste auch als unterschiedliche Kanäle eines Bilds kodiert sein. Dann könnte ein oder mehrere Kanäle für die nachfolgende Auswertung ausgewählt werden. Zum Beispiel können unterschiedliche Kanäle mit unterschiedlichen Fluoreszenz-Wellenlängen assoziiert sein, die unterschiedliche Zellstrukturen kennzeichnen. Dann kann ein oder können mehrere Kanäle ausgewählt werden für eine bestimmte Auswerte-Aufgabe, wie zum Beispiel das Bestimmen der Schätzung der Anzahl oder das Bestimmen der Schätzung des Konfluenzgrads. Wenn mehrere miteinander registrierte Bilder unterschiedlicher Bildgebungsmodalitäten für eine Probe zur Verfügung stehen, kann es möglich sein, automatisch denjenigen Kontrast auszuwählen, der für eine nachfolgende Auswertung besonders geeignet ist. Optional wäre es auch möglich, die Auswertung parallel für die verschiedenen Kontraste durchzuführen und dann die Ergebnisse miteinander zu vergleichen oder zu fusionieren.

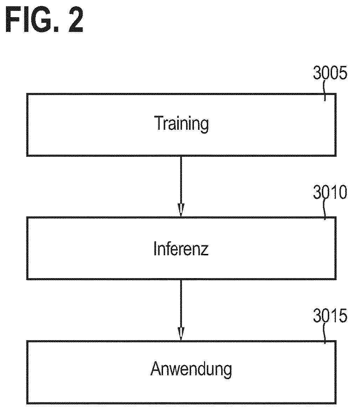

FIG. 2 ist ein Flussdiagramm eines beispielhaften Verfahrens. Zum Beispiel könnte das Verfahren aus FIG. 2 zumindest teilweise vom Prozessor 102 der Vorrichtung 101 ausgeführt werden.

FIG. 2 illustriert Aspekte im Zusammenhang mit verschiedenen Phasen einer Auswertung von Mikroskopiebildern.

In Box 3005 erfolgt ein Training von ein oder mehreren ML Algorithmen, die für eine Auswertung bzw. Analyse von Mikroskopiebildern verwendet werden, beispielsweise um eine Schätzung der Anzahl und/oder des Konfluenzgrads der abgebildeten Zellen zu bestimmen. Im Rahmen des Trainings werden also Parameterwerte von entsprechenden ML Algorithmen bestimmt.

Dies kann im Wege einer iterativen Optimierung erfolgen, die eine bestimmte Zielfunktion maximiert oder minimiert, unter Berücksichtigung von Trainingsdaten - d.h. Trainings-Mikroskopiebildern, denen Vorwissen bzw. Grundwahrheit (engl. "ground truth") in Form von Labeln zugeordnet ist. Beispielsweise könnten im Zusammenhang mit KNNs Techniken der Rückwärtspropagation eingesetzt werden. Dabei kann ein Gradientenabstiegsverfahren verwendet werden, um Gewichte der verschiedenen Schichten des KNNs zu setzen.

Die Label können von Experten manuell vergeben werden. Es wäre aber auch denkbar, dass Label automatisch erzeugt werden. Dazu können zusätzliche Bildkontraste, insbesondere ein Fluoreszenzkontrast, verwendet werden. Solche zusätzlichen Bildkontraste können ausschließlich während des Trainings verfügbar sein.

Die Trainingsdaten können erweitert werden, indem z.B. Artefakte - wie Kratzer, Staub, Dreck - simuliert wird und auf Trainings-Mikroskopiebilder überlagert werden Die Trainingsdaten können erweitert werden, um ein genaueres Training zu erreichen. Beispielsweise könnten Artefakte hinzugefügt werden, wie zum Beispiel bakterielle oder fungizid Infektionen der Zellkultur. Derart kann eine Robustheit des maschinengelernten Auswertungsalgorithmus bereitgestellt werden.

Unterschiedliche Auswertealgorithmen - etwas zum Bestimmen der Schätzung der Anzahl und der Schätzung des Konfluenzgrads - können gemeinsam oder getrennt trainiert werden.

In manchen Beispielen ist ein gemeinsames Training mit einer Verlustfunktion denkbar, welche eine Konsistenz zwischen der Schätzung der Anzahl und des Konfluenzgrads erzwingt. Die Verlustfunktion könnte z.B. eine Abwesenheit von Zellen in einer Konfluenzregion bestrafen und/oder welche eine Anwesenheit einer Zelle in einer Konfluenzregion belohnen. Die Verlustfunktion könnte z.B. eine Varianz einer Ortsraumdichte von Zellen innerhalb von Konfluenzregionen bestrafen. Das bedeutet also, dass überprüft werden kann, ob die Ortsraumdichte der Zellen selektiv innerhalb der Konfluenzregionen betrachtet, als Funktion des Ortes variiert. Liegt eine solche signifikante Variation vor, kann das ein Hinweis dafür sein, dass entweder die Anzahl der Zellen oder der Konfluenzgrads oder beides falsch geschätzt wurden.

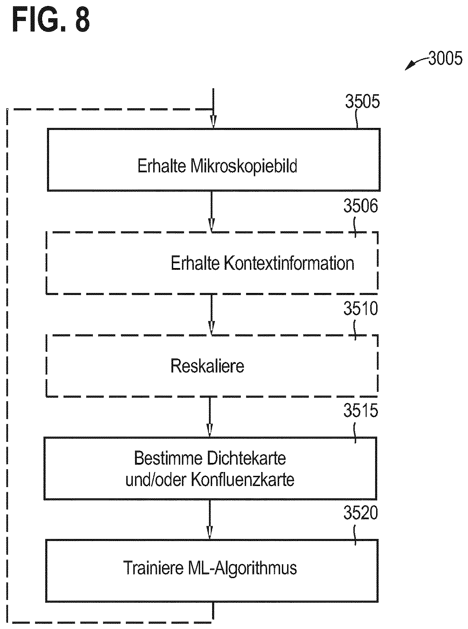

Eine mögliche detaillierte Implementierung von Box 3005 wird später im Zusammenhang mit FIG. 8 beschrieben.

Nach abgeschlossenem Training kann dann in Box 3010 die Inferenz folgen, d.h. Bestimmung von Schätzungen ohne Vorwissen. In manchen Beispielen wäre es aber auch möglich, dass das Training wiederholt durchgeführt wird, z.B. verschachtelt mit der Inferenz in Box 3010. Dadurch können die ein oder mehreren KNNs oder andere ML Algorithmen kontinuierlich verbessert werden. Zum Beispiel könnte eine Benutzerinteraktion über eine Mensch-Maschine-Schnittstelle implementiert werden, die abfragt, ob bestimmte Schätzungen zutreffend sind oder nicht.

In Box 3010 erfolgt dann die Anwendung des einen oder der mehreren ML Algorithmen, die in Box 3005 trainiert werden. Das bedeutet, dass - ohne Vorwissen - Schätzungen für bestimmte Observablen, die mit den abgebildeten Zellen assoziiert sind, bestimmt werden. Beispielsweise kann eine Schätzung der Anzahl der Zellen und/oder eine Schätzung des Konfluenzgrads der Zellen basierend auf einem lichtmikroskopischen Bild bestimmt werden.

In manchen Beispielen kann eine Schätzung - zum Beispiel Anzahl der Zellen und/oder des Konfluenzgrads -aufgelöst für unterschiedliche Zellarten durchgeführt werden. Beispielsweise könnten tote und lebende Zellen getrennt gezählt werden. Zum Beispiel wäre es denkbar, dass abgelöste und nicht abgelöste Zellen getrennt gezählt werden. Es wäre möglich, dass Zellen in Mitose und Zellen in Apoptose getrennt gezählt werden.

Die Schätzung in Box 3010 kann durch Kontextinformation unterstützt werden. Die Kontextinformation kann automatisch oder manuell bestimmt werden. Beispielhafte Kontextinformation umfasst: frühere Schätzungen; Benutzer; Zellart; verwendete Bildgebungsmodalität; Vergrößerungsfaktor einer Objektiv-Linse einer Bildgebungsvorrichtung; Typ der Objektiv-Linse; Kamera oder Kameraadapter; Mikroskopeinstellungen.

Zum Beispiel wäre es denkbar, dass Ergebnisse der Schätzung basierend auf solcher Zusatzinformation plausibilisiert werden. Plötzliche sprunghafte Änderungen der Schätzung für die Anzahl und/oder für den Konfluenzgrads ohne Veränderung der Bildgebungsmodalität oder Bildgebungsparameter können zum Beispiel unplausibel sein.

Es wäre möglich, dass der Benutzer die Auswertung über eine Mensch-Maschinen-Schnittstelle (MMI) - typischerweise eine graphische Benutzerschnittstelle (GUI) - starten und/oder unterbrechen kann. Es könnte auch ein automatischer Abbruch der Auswertung erfolgen, zum Beispiel wenn die Schätzungen bestimmte vorgegebene Bereiche verlassen, zum Beispiel weil sie unzuverlässig sind, oder wenn ein bestimmtes Konfidenzniveau erreicht wird.

In Box 3015 kann dann optional eine Anwendung basierend auf den ein oder mehreren in Box 3010 bestimmten Schätzungen erfolgen. Nachfolgend sind einige Szenarien dargelegt.

In einer Variante wird die Schätzung der Anzahl der Zellen und/oder die Schätzung des Konfluenzgrads über eine MMI an den Benutzer ausgegeben. Zum Beispiel können solche Werte grafisch angezeigt werden, etwa zusammen mit den Mikroskopiebildern. Die Mikroskopiebilder können in ihrer ursprünglichen Größe ausgegeben werden, d.h. können zurück skaliert werden oder eine Kopie könnte unskaliert im Speicher behalten werden und dann ausgegeben werden. Die Schätzungen könnten als Überlagerungen mit den Mikroskopiebildern in einer GUI angezeigt werden. Z.B. könnten die Zellmittelpunkte und/oder Konfluenzregionen dem Mikroskopiebild überlagert werden, beispielsweise mit einstellbarer Transparenz. Es könnte z.B. eine Bildsequenz erfasst werden, etwa mit einer festen Bildwiderholrate. Dann kann die Schätzung wiederholt bestimmt werden und jeweils mit dem zugehörigen Bild der Bildsequenz angezeigt werden. Insbesondere kann also die Schätzung mit der Bildwiederholrate neu bestimmt werden, also z.B. in Echtzeit.

Beispielsweise könnte überprüft werden, ob die Anzahl der Zellen über einem bestimmten Schwellenwert liegt. Beispielsweise könnte überprüft werden, ob die Anzahl der Zellen im Bildausschnitt oder in der gesamten Probe über einen bestimmten Schwellenwert liegt. Wenn die Anzahl der Zellen zu gering ist - zum Beispiel, weil der Bildausschnitt zu klein gewählt ist oder weil die Probe nur wenige Zellen umfasst - könnte ein automatischer Workflow ausgelöst werden, der die Erfassung weiterer Bilder bewirkt, zum Beispiel an anderen Positionen und/oder mit anderen Vergrößerungsfaktoren.

Neben der Schätzung könnte zum Beispiel auch eine Konfidenz bzw. Zuverlässigkeit der Schätzung ausgegeben werden. Zum Beispiel könnte ein Konfidenzniveau ortsaufgelöst angegeben werden, zum Beispiel könnten der besonders solche Bereiche im Mikroskopiebild hervorgehoben werden, bei denen die Schätzung der Anzahl der Zellen und/oder die Schätzung des Konfluenzgrads mit einer großen Ungenauigkeit verbunden sind.

Die ein oder mehreren Schätzungen könnten im Zusammenhang mit einem Workflow genutzt werden. Zum Beispiel könnten ein oder mehrere Aktionen einer Mikroskopiemessung in Abhängigkeit von der Schätzung der Anzahl und/oder des Konfluenzgrads der Zellen ausgelöst werden. Zum Beispiel könnte eine weitere Bilderfassung, zum Beispiel mit bestimmten Bildgebungsparametern ausgelöst werden. Wird zum Beispiel ein bestimmter Konfluenzgrad über- oder unterschritten, so könnte automatisiert ein lichtmikroskopisches Bild erfasst werden. Dazu könnte eine entsprechende Bildgebungsvorrichtung über eine Kommunikationsschnittstelle angesteuert werden (vergleiche FIG. 1: Bildgebungsvorrichtungen 111, 112 und Schnittstelle 104). Es könnte wahlweise eine Warnung ausgegeben werden. Es könnte wahlweise ein Messprotokoll um einen Eintrag erweitert werden.

Die ein oder mehreren Schätzungen könnten in Metadaten (z.B. Header-Informationen) der entsprechenden lichtmikroskopischen Bilder gespeichert werden. Als allgemeine Regel können zusätzlich oder alternativ zu den Schätzungen der Anzahl und/oder des Konfluenzgrads auch andere Informationen in den Metadaten der Bilder gespeichert werden. Zum Beispiel könnte eine Vergrößerung einer Objektiv-Linse in den Metadaten gespeichert werden. Es könnte ein Typ der Objektiv-Linse in den Metadaten gespeichert werden. Es könnte ein Typ einer Bilderfassungseinheit, zum Beispiel einer Kamera oder eines Kamera-Adapters in den Metadaten gespeichert werden. Es könnte ein Typ des Probenträgers in den Metadaten gespeichert werden. Solche Daten können zum Beispiel automatisch bestimmt werden oder manuell abgefragt werden.

Es könnte auch ein Vergleich der ein oder mehreren Schätzungen mit früheren Schätzungen erfolgen. Derart könnte zum Beispiel ein Zeitverlauf der Schätzung der Anzahl der Zellen und/oder der Schätzung des Konfluenzgrads bestimmt werden. Beispielsweise könnte eine Änderungsrate ermittelt werden.

Die Zellzählung kann für eine Schätzung der Konzentration der Zellen verwendet werden. Zum Beispiel wäre es denkbar, dass eine Schätzung für die Gesamtzahl der Zellen auf der Probe bestimmt wird. Dazu kann zum Beispiel die Dichte der Zellen geschätzt werden und mit einer bekannten Fläche der Probe als Vorwissen multipliziert werden. Die Fläche der Probe kann aus der Geometrie des Probenträgers ermittelt werden. Der Probenträger könnte automatisch erkannt werden oder vom Benutzer spezifiziert werden. Es könnte auch eine Anwendung im Zusammenhang mit einer "Neubauer-Kammer" durchgeführt werden. Zum Beispiel könnte automatisch erkannt werden, ob die Zellen in einer Suspension schwimmen. Das Verwenden von Neubauer-Kammern kann entbehrlich sein, wenn die Ergebnisse der Schätzung der Anzahl der Zellen ausreichend genau ist. Die Schätzung der Anzahl der Zellen kann auch dazu verwendet werden, um zu überprüfen, welcher Anteil der Zellen nach einem Ablöse-Schritt (zum Beispiel mit Trypsin) noch auf einem Probenträger haften geblieben sind.

In verschiedenen Beispielen wäre es denkbar, dass eine bestimmte Analyseoperation in Abhängigkeit von der Schätzung der Anzahl und/oder des Konfluenzgrads der Zellen ausgelöst wird. Beispiele für solche Analyseoperationen umfassen zum Beispiel: longitudinale Analyse (das heißt Bestimmung von zeitlichen Veränderungen); Gesamtanzahl-Schätzung (das heißt Abschätzung der Anzahl der Zellen im gesamten Probenbereich); Zellzyklus-Analyse (das heißt Bestimmung von Phasen der Zellen im Zellzyklus); Zellwachstum-Analyse (das heißt Bestimmung der Veränderung der größer als Funktion der Zeit). Zum Beispiel könnte der Zeitpunkt ermittelt werden, zu dem die Zellen voraussichtlich fertig gewachsen oder bereit zum Versetzen auf eine neue Probe sind. Zum Beispiel könnte eine Zellwachstumskurve aus einer Zeitserie der Schätzung des Konfluenzgrads bestimmt werden. Es könnte zum Beispiel ein Fitness-Indikator für die Zellkultur bestimmt werden. Dies könnte z.B. basieren auf einem Vergleich der Schätzung für die Anzahl mit der Schätzung für den Konfluenzgrad für verschiedene Zellarten. Sind z.B. anteilig viele tote Zellen vorhanden, dann kann die Fitness gering sein. Sind z.B. viele Zellen in einem bestimmten Zellstadium vorhanden, dann kann die Fitness gering sein.

In manchen Beispielen kann die Anwendung in Box 3015 also zwischen unterschiedlichen Zellarten unterscheiden. Dies trifft insbesondere dann zu, wenn die Schätzung der Anzahl und/oder des Konfluenzgrads getrennt für verschiedene Zellarten, z.B. lebende vs. tote Zellen, usw., bestimmt wurde.

Ist Informationen betreffend unterschiedliche Zellarten verfügbar, kann beispielsweise eine Aussage über den Zustand der Zellkultur aus einem Vergleich entsprechende Schätzungen für die unterschiedlichen Zellarten abgeleitet werden. Der Zustand der Zellkultur könnte auch zeitaufgelöst über einen bestimmten Zeitraum ermittelt werden. Eine entsprechende Statistik könnte an den Benutzer ausgegeben werden.

Soweit Lokalisierung von Zellen, zum Beispiel zugehörig zu unterschiedlichen Zellarten, verfügbar sind, können lokal weitere Untersuchungen durchgeführt werden. Zum Beispiel könnten gezielt solche Zellen ausgewählt werden, die sich in der Mitose befinden.

Je nach Zustand der Zellkultur könnte ein automatischer oder halbautomatischer Workflow ausgelöst werden. Zum Beispiel könnte eine Warnung an einen Benutzer ausgegeben werden, wenn während einer Zeitserie von erfassten Mikroskopiebilder ein gewisser Anteil von toten Zellen gegenüber lebenden Zellen überschritten wird.

Die Anzahl der lebenden Zellen könnte ortsaufgelöst bestimmt werden. Das heißt es könnte eine Zählung der lebenden Zellen über verschiedene Areale der Probe im abwertenden Zustand durchgeführt werden. Dies kann als Basis für eine Verdünnungsberechnung beim Passagieren genutzt werden.

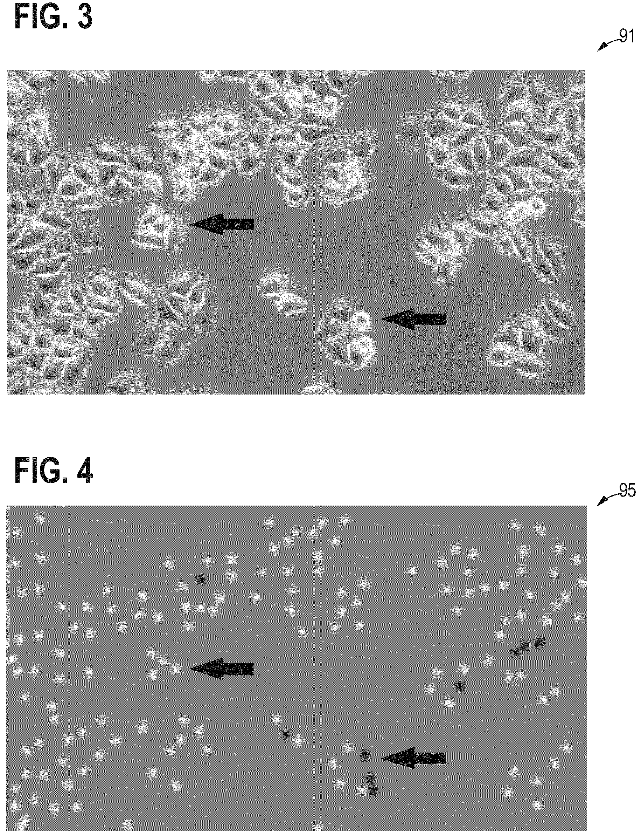

FIG. 3 illustriert ein beispielhaftes Mikroskopiebild 91. Sichtbar sind Zellen. Insbesondere sind Zellarten sichtbar, nämlich lebende Zellen und tote Zellen. Es sind die beiden Arten der Zellen jeweils mit einem Pfeil markiert.

Basierend auf solchen Mikroskopiebildern wie dem beispielhaften lichtmikroskopischen Bild 91 kann eine Schätzung für die Anzahl der Zellen und/oder eine Schätzung für den Konfluenzgrad bestimmt werden, optional getrennt für unterschiedliche Zellarten.

Grundsätzlich gibt es verschiedene Optionen, um die Schätzung für die Anzahl der Zellen und/oder die Schätzung für den Konfluenzgrad zu bestimmen. Z.B. könnte eine Zell-Indikator-Repräsentation verwendet werden, welche das Vorhandensein oder die Abwesenheit von Zellen kodiert. Es könnten Karten verwendet werden, die die Zellmittpunkte anzeigen. Es könnten Detektor-Ergebnis-Listen verwendet werden.

Gemäß verschiedenen Beispielen kann eine solche Schätzung für die Anzahl der Zellen und/oder die Schätzung für den Konfluenzgrad insbesondere basierend auf einer Dichtekarte bestimmt werden. Eine solche Dichtekarte ist für das Mikroskopiebild 91 auf FIG. 3 in FIG. 4 dargestellt.

FIG. 4 illustriert schematisch eine Dichtekarte 92. Im Beispiel der FIG. 4 wird die Dichtekarte 92 für das lichtmikroskopische Bild 91 aus FIG. 3 erstellt. Die Dichtekarte kennzeichnet über den Kontrast die Wahrscheinlichkeit für die An- oder Abwesenheit einer Zelle. In der Dichtekarte 92 gemäß dem dargestellten Beispiel ist dazu jeweils an der Position des geometrischen Zellmittelpunkts eine vorgegebene Dichteverteilung zentriert. Beispielsweise könnten Gauß-Glockenkurven ("Gauß-Kernel") als vorgegebene Dichteverteilungen verwendet werden. Aus FIG. 4 ist ersichtlich, dass eine Halbwertsbreite der Gauß-Glockenkurven signifikant kleiner ist als der typische Durchmesser der Zellen.

Ein lokales Ortsraumintegral über jede der Gauß-Glockenkurven für die lebenden Zellen kann z.B. einen Wert von 1 ergeben. Dadurch kann erreicht werden, dass das Ortsraumintegral über die gesamte Dichtekarte 92 gleich der Anzahl der Zellen ist. In jedem Fall kann basierend auf dem Ortsraumintegral die Anzahl der Zellen geschätzt werden.

In FIG. 4 ist ersichtlich, dass die vorgegebenen Dichteverteilungen für die verschiedenen Zellarten - nämlich lebende Zellen und tote Zellen - des Mikroskopiebilds 91 unterschiedliche Wertebereiche aufweisen (mit weiß und schwarz kodiert). Das ist grundsätzlich optional.

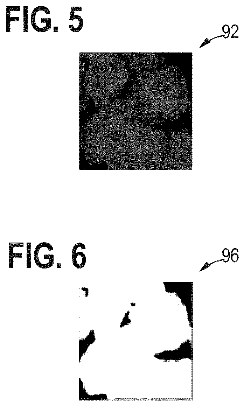

FIG. 5 ist ein weiteres Beispiel eines Mikroskopiebilds 92. Das lichtmikroskopische Bild 92 wurde im Beispiel der FIG. 5 mit Fluoreszenzkontrast als Bildgebungsmodalität erfasst.

FIG. 6 illustriert eine Konfluenzkarte 96, zugehörig zum lichtmikroskopischen Bild 92 aus FIG. 5. Die Konfluenzkarte maskiert Konfluenzregionen (weißer Kontrast in FIG. 6), das heißt Bereiche, in denen Zellen angeordnet sind. Die Schätzung des Konfluenzgrads kann basierend auf der Konfluenzkarte 96 bestimmt werden.

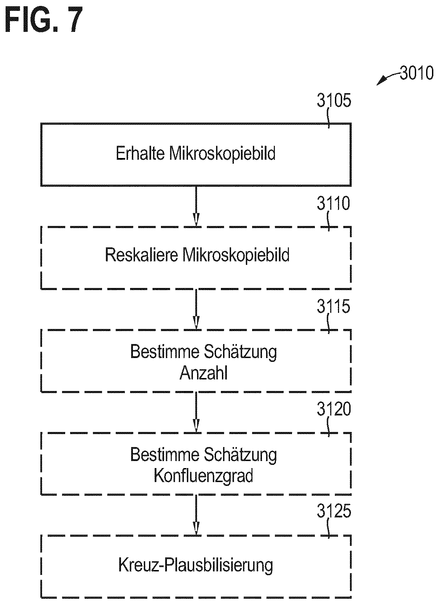

FIG. 7 ist ein Flussdiagramm eines beispielhaften Verfahrens. FIG. 7 illustriert Aspekte mit der digitalen Auswertung von Mikroskopiebildern zur Schätzung von Anzahl und/oder Konfluenzgrads von Zellen, die von den Mikroskopiebildern abgebildet werden. Beispielsweise könnte das Verfahren aus FIG. 7 von einer Datenverarbeitungseinrichtung ausgeführt werden, die in Kommunikationsverbindung mit einem Mikroskop steht. Beispielsweise könnte das Verfahren aus FIG. 7 von der Vorrichtung 101 ausgeführt werden, insbesondere vom Prozessor 102 basierend auf Programmcode, den der Prozessor 102 aus dem Speicher 103 lädt und ausführt.

Das Verfahren der FIG. 7 dient zur Auswertung eines Mikroskopiebilds, etwa wie im Zusammenhang mit einer der FIGs. 3 und 5 diskutiert. Mittels des Verfahrens der FIG. 7 kann insbesondere eine Schätzung der Anzahl der Zellen und/oder eine Schätzung des Konfluenzgrads der Zellen bestimmt werden.

FIG. 7 kann z.B. Box 3010 implementieren.

Grundsätzlich wäre es denkbar, dass die ein oder mehreren Schätzgrößen vom Benutzer ausgewählt werden. Es wäre aber auch möglich, dass die Schätzung der Anzahl der Zellen und/oder die Schätzung des Konfluenzgrads der Zellen wahlweise aktiviert wird, etwa basierend auf einem Betriebsmodus eines verwendeten Mikroskops, dass das lichtmikroskopische Bild erfasst, oder einer verwendeten Bildgebungsmodalität (diese könnte z.B. aus Meta-Information im Mikroskopiebild abgeleitet werden). Zum Beispiel wäre es denkbar, dass bei verwendetem Fluoreszenzkontrast mit Markierung des Zellkerns als Bildgebungsmodalität eine Schätzung des Konfluenzgrads nicht notwendig ist, und automatisch ausschließlich die Schätzung der Anzahl der Zellen aktiviert wird.

Grundsätzlich könnte die Aktivierung der Schätzung der Anzahl der Zellen und/oder die Schätzung des Konfluenzgrads automatisch bestimmt werden basierend auf einer vorgegebenen Einstellung, wie beispielsweise Zellart oder Bildgebungsmodalität.

Eine geeignete Schätzgröße kann auch basierend auf Metadaten ausgewählt werden. Zum Beispiel könnte basierend auf Metadaten des Bilds oder Bilderfassungseinstellungen ausgewählt werden, ob eine Schätzung der Anzahl der Zellen und/oder eine Schätzung des Konfluenzgrads durchgeführt wird. Es könnte auch mittels eines Vorverarbeitungsalgorithmus eine Grobanalyse des Bildinhalts durchgeführt werden und basierend auf dieser vorgelagerten Auswertung entweder der Auswertungsalgorithmus zum Bestimmen der Schätzung der Anzahl der Zellen und/oder zum Bestimmen des Konfluenzgrads ausgewählt werden. Metadaten könnten auch über einen Barcode bereitgestellt werden. Eine Benutzerauswahl der denkbar.

In den verschiedenen hierin beschriebenen Beispielen können unterschiedliche Auswertealgorithmen verwendet werden. Zum Beispiel können Schwellenwert-basierte Auswertealgorithmen mit empirischer Parametrisierung verwendet werden. Es könnten auch ML Auswertealgorithmen verwendet werden. Es könnten Auswertealgorithmen verwendet werden, die eine Dichtekarte und/oder eine Konfluenzkarte verwenden.

Wenn mehrere Auswertungsalgorithmen zum Bestimmen von Schätzungen, beispielsweise der Anzahl der Zellen und/oder des Konfluenzgrads, verfügbar sind, können unabhängige Schätzungen bestimmt werden, unter Verwendung der unterschiedlichen Auswertungsalgorithmen. Diese können dann fusioniert werden.

Zunächst wird in Box 3105 ein Mikroskopiebild (typischerweise ein Licht-Mikroskopiebild) erhalten, welches eine Vielzahl von Zellen abbildet. Dies könnte zum Beispiel das Ansteuern einer Bildgebungsvorrichtung über eine Kommunikationsschnittstelle umfassen, so dass die Bildgebungsvorrichtung das Bild erfasst (vergleiche FIG. 1: Bildgebungsvorrichtungen 111, 112).

Das Erfassen des Bilds könnte zum Beispiel von einem Benutzer aktiv ausgelöst werden, etwa in dem ein entsprechender Knopf in einer grafischen Benutzerschnittstelle geklickt wird. Das Erfassen des Mikroskopiebilds könnte auch automatisch ausgelöst werden, etwa nach einem vorgegebenen Zeitplan. Beispielsweise könnte eine Bilderfassung automatisch ausgelöst werden, etwa wenn ein oder mehrere Bildgebungsparameter verändert werden. Zum Beispiel könnte eine automatische Bilderfassung ausgelöst werden, wenn das Sichtfeld verändert wird, etwa weil der Probenhalter bewegt wird. Eine automatische Bilderfassung könnte ausgelöst werden, wenn die Probe gewechselt wird eine automatische Bilderfassung könnte ausgelöst werden, wenn ein Objektiv gewechselt wird.

Beispielsweise könnte in Abhängigkeit vom Probenträger einer Anzahl von zu erfassenden Bildern und/oder Positionen der Probenbühne für zu erfassende Bilder festgelegt werden. Beispielsweise können standardisierte Probenträger verwendet werden, zum Beispiel Multiwell-Platten. Bei einer solchen Vorgehensweise können die Ergebnisse eines Auswertungsalgorithmus für eine bestimmte Position der Probenbühne extrapoliert werden auf andere Probenbereiche.

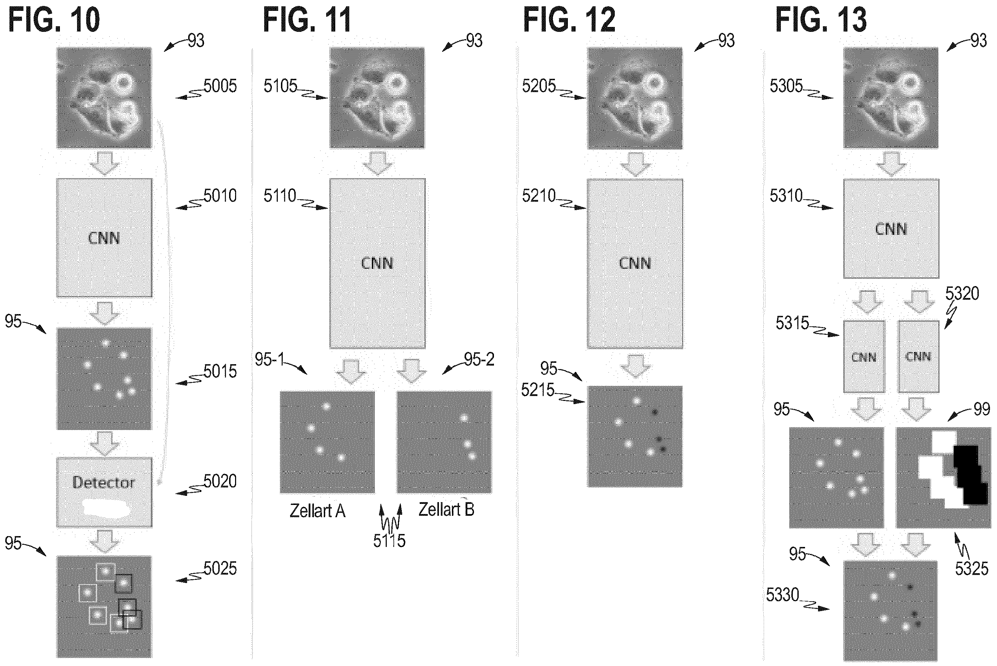

Beispielsweise wäre es denkbar, dass das Mikroskopiebild in Box 3105 erhalten wird, nachdem ein weiteres Mikroskopiebild als nicht brauchbar erachtet wurde, insbesondere könnte das Mikroskopiebild in Reaktion auf die Unbrauchbarkeit des weiteren Mikroskopiebilds erhalten werden. Dabei gibt es grundsätzlich verschiedene Kriterien, die Brauchbarkeit zu bestimmen Beispielsweise könnte festgestellt werden, dass eine Anzahl von Zellen, die im weiteren Mikroskopiebild sichtbar ist, unterhalb eines bestimmten Schwellenwerts liegt. Das bedeutet, dass im weiteren Mikroskopiebild nur vergleichsweise wenige oder gar keine Zellen sichtbar sein können. Dann könnte als Reaktion darauf das Mikroskopiebild in Box 3105 erhalten werden. Zum Bestimmen einer Schätzung für die Anzahl der Zellen können die hierin beschriebenen Techniken, vergleiche zum Beispiel FIG. 10 bis FIG. 13, verwendet werden. Zum Beispiel könnten das weitere Mikroskopiebild bzw. das Mikroskopiebild an unterschiedlichen Positionen einer Probe erfasst werden. Zum Erfassen des Mikroskopiebild könnte also eine Probenbühne des Mikroskops bewegt werden.

Ein Mikroskopiebild könnte aber auch aus einer Datenbank geladen werden bzw. aus einem Speicher geladen werden.

Optional wäre es denkbar, dass die Qualität des Mikroskopiebilds bewertet wird. Basierend darauf kann bestimmt werden, ob das Mikroskopiebild dazu geeignet ist, nachfolgende Analyseoperationen zu unterstützen. Das bedeutet, dass überprüft werden kann, ob das Mikroskopiebild es ermöglicht, die Schätzung der Anzahl der Zellen und/oder die Schätzung des Konfluenzgrads mit einer ausreichenden Genauigkeit zu bestimmen. Wird zum Beispiel eine nicht ausreichende Qualität festgestellt, stehen die folgenden Optionen zur Verfügung: beispielsweise kann das Ausführen der nachfolgenden Boxen zur Analyse gänzlich unterbleiben. Es wäre auch möglich, dass zum Beispiel nur die Schätzung der Anzahl der Zellen erfolgt, aber nicht die Schätzung des Konfluenzgrads, oder andersherum. Alternativ oder zusätzlich kann eine neue Bilderfassung angestoßen werden, zum Beispiel mit angepassten Bilderfassungsparameter an. Es wäre auch möglich, eine Warnung an den Benutzer auszugeben oder beim Benutzer abzufragen, wie weiter vorgegangen werden soll. Das Ergebnis einer solchen Beurteilung der Bildqualität kann in den Metadaten des Bilds gespeichert werden. Die Qualität kann z.B. bewertet werden, indem Kratzer oder Dreck erkannt wird. Dazu können geeignete Qualitätsbewertungsalgorithmen verwendet werden. Grundsätzlich gibt es unterschiedliche Möglichkeiten die Bildqualität zu beurteilen. Beispielsweise wäre es möglich, zu überprüfen, ob eine Kantenschärfe einen bestimmten Schwellenwert überschreitet. Es kann überprüft werden, ob sich die Probe im Fokus befindet oder defokussiert angeordnet ist. Es könnte auch eine Bestimmung von Zellarten durchgeführt werden und es könnte anschließend bestimmt werden, ob die gewünschte Analyse für diese Zellarten geeignet ist. Alternativ oder zusätzlich könnte überprüft werden, ob Rauschen, Verschmutzung, Artefakte usw. in dem lichtmikroskopischen Bild vorhanden sind.

Das Erhalten eines Mikroskopiebild in Box 3105 kann auch eine automatische Auswahl eines geeigneten Bildgebungskontrasts bzw. einer geeigneten Bildgebungsmodalität umfassen. Beispielsweise wäre es denkbar, dass, wenn mehrere Kontraste vorhanden sind, ein geeigneter Kontrast ausgewählt wird. Zum Beispiel kann je nach Aufgabe, zum Beispiel ob eine Schätzung der Anzahl oder eine Schätzung des Konfluenzgrads oder eine bestimmte darauf basierende Anwendung (vgl. Box 3015) durchgeführt werden soll, ein anderer Kontrast ausgewählt werden. Es könnte eine entsprechende Nachschlagetabelle vorgesehen sein. Allgemein kann also das Erhalten des lichtmikroskopischen Bilds das Auswählen des lichtmikroskopischen Bilds aus einer Vielzahl von lichtmikroskopischen Bildern mit unterschiedlichen Kontrasten umfassen.

Anschließend kann in Box 3110 optional die Größe des Mikroskopiebilds aus Box 3105 angepasst werden. Insbesondere kann eine Anpassung der Größe erfolgen, so dass die Größe einer bestimmten vorgegebenen Zellstruktur - etwa des Zellkerns oder des durchschnittlichen Zelldurchmessers - einem vorgegebenen Referenzwert entspricht. Dies bedeutet, dass das Mikroskopiebild reskaliert werden kann. Es wird ein reskaliertes Mikroskopiebild erhalten, das dann Grundlage für die nachfolgenden Boxen in FIG. 7 sein kann.

Dabei gibt es grundsätzlich unterschiedliche Möglichkeiten, die Größe des Mikroskopiebilds in Box 3110 anzupassen. Zum Beispiel wäre es denkbar, dass ein entsprechender ML Algorithmus (Reskalierungsalgorithmus) verwendet wird, der mittels einer Bild-zu-Bild Transformation basierend auf dem lichtmikroskopischen Bild die Größe des Mikroskopiebilds anpasst. Beispielsweise kann eine Regression, Klassifikation oder Ordinal-Regression verwendet werden. In einem solchen Szenario ist es nicht erforderlich, zunächst einen Skalierungsfaktor explizit zu berechnen und dann eine Vergrößerung oder Verkleinerung in Abhängigkeit vom Skalierungsfaktor nachgelagert durchzuführen. Vielmehr kann durch ein geeignetes Training des Reskalierungsalgorithmus die Reskalierung automatisch implementiert werden. Nachträglich kann dann durch einen Vergleich des reskalierten Bilds mit dem ursprünglichen Bild der Skalierungsfaktor ermittelt werden, wenn das gewünscht ist (z.B. um eine Plausibilität des Skalierungsfaktors zu prüfen). Ein solcher Reskalierungsalgorithmus könnte zum Beispiel durch ein KNN implementiert werden. Das KNN kann zum Beispiel dadurch trainiert werden, dass als Trainings-Bilder Mikroskopiebilder eingegeben werden und anschließend eine Verlustfunktion berechnet wird, die eine Abweichung der Größe der Ausgabe des KNN von einem Referenzbild, das von einem Benutzer manuell reskaliert wurde, berücksichtigt. Basierend auf dem Wert der Verlustfunktion kann dann das Training des KNN erfolgen.

In einem weiteren Beispiel könnte ein maschinengelernter Reskalierungsalgorithmus dazu verwendet werden, um mittels einer Bild-zu-Skalar-Transformation einen Skalierungsfaktor zu bestimmen. Der Skalierungsfaktor kann mit einer Regression kontinuierlich ausgegeben werden. Als Eingabe kann der Reskalierungsalgorithmus das gesamte lichtmikroskopische Bild oder Bildausschnitte erhalten. Werden Skalierungsfaktoren für mehrere Bildausschnitte bestimmt, so können diese anschließend gemittelt werden; das bedeutet, es findet eine Mittelung in Bezug auf die mehreren Bildausschnitte statt. Dann kann in einem nachgelagerten Algorithmus die Größe des lichtmikroskopischen Bilds basierend auf dem Skalierungsfaktor geändert werden. Bei einem solchen Bild-zu-Skalar Reskalierungsalgorithmus ist keine explizite Lokalisierung von Zellstrukturen erforderlich; geeignete Merkmale zur Bestimmung des Skalierungsfaktors werden vielmehr maschinengelernt. Ein solcher Reskalierungsalgorithmus könnte zum Beispiel durch ein KNN implementiert werden. Das KNN kann zum Beispiel dadurch trainiert werden, dass als Trainings-Bilder Mikroskopiebilder eingegeben werden und anschließend eine Verlustfunktion berechnet wird, die eine Abweichung der Ausgabe des KNN von einem Referenz-Skalierungsfaktor, der von einem Benutzer manuell bestimmt wurde, berücksichtigt. Basierend auf dem Wert der Verlustfunktion kann dann das Training des KNN erfolgen.

Die Verwendung eines KNN für das Durchführen der Reskalierung ist aber nur ein Beispiel. In einem anderen Beispiel wäre es denkbar, dass die Zellstrukturen, für die der vorgegebenen Referenzwert vorhanden ist, im lichtmikroskopischen Bild lokalisiert werden. Zum Beispiel kann dazu einen Objekterkennungsalgorithmus verwendet werden. Dieser könnte auf Heuristiken basieren. Z.B. könnten bestimmte vorgegebene Konturen aufgefunden werden, dann ein Ellipsen-Fit an die Konturen durchgeführt werden, und basierend darauf die Radien der Ellipsen - als Größe der Zellen - bestimmt werden. Die vorgegebene Struktur kann dann also den Zelldurchmesser beschreiben. Dann kann basierend auf diesem Lokalisieren die durchschnittliche Größe der Zellstruktur im lichtmikroskopischen Bild bestimmt werden und basierend auf dem Verhältnis der durchschnittlichen Größe und dem vorgegebenen Referenzwert ein Skalierungsfaktor bestimmt werden. Zum Beispiel kann die durchschnittliche Größe der Zellstruktur jeweils für jeden von mehreren Bildausschnitten bestimmt werden und dann eine Mittelung dieser Werte erfolgen, d.h. die Mittelung erfolgt in Bezug auf die Bildausschnitte. Dann kann das Mikroskopiebild basierend auf dem Skalierungsfaktor vergrößert oder verkleinert werden. Eine solche Bestimmung des Skalierungsfaktors kann zum Beispiel mehrfach für mehrere Teilbereiche des Mikroskopiebilds durchgeführt werden. Dann könnte ein durchschnittlicher Skalierungsfaktor bestimmt werden. Diese durchschnittliche Skalierungsfaktor kann man auf das gesamte Bild angewendet werden.

Das Anpassen der Größe des Mikroskopiebilds muss nicht in einem einzelnen Schritt erfolgen. Beispielsweise kann eine iterative Anpassung mit unterschiedlichen Reskalierungsschrittweiten durchgeführt werden. Das bedeutet, dass iterativ jeweils zum Beispiel die Größe der jeweiligen Zellstruktur abgeschätzt werden kann und dann eine entsprechende Reskalierung durchgeführt werden kann. Wird zum Beispiel festgestellt, dass der Skalierungsfaktor außerhalb eines vorgegebenen Bereichs ist, könnte eine grobe Vor-Skalierung stattfinden und dann eine genauere Skalierung basierend auf der groben Vor-Skalierung.

Für unterschiedliche Auswerteaufgaben können unterschiedliche Skalierungsfaktoren bestimmt werden. Zum Beispiel könnte eine erste Instanz des reskalierten Bilds für die Bestimmung der Schätzung der Anzahl der Zellen in Box 3115 verwendet werden und eine zweite Instanz des reskalierten Bilds für die Schätzung des Konfluenzgrads in Box 3120 bestimmt werden.

Grundsätzlich wäre es denkbar, dass in Box 3110 mehrere Instanzen des reskalierten Bilds bestimmt werden. In manchen Beispielen ist es möglich, dass die Probe mehrere Zellarten umfasst. In einem solchen Beispiel ist es möglich, mehrere Skalierungsfaktoren für die unterschiedlichen Zellarten zu bestimmen. Allgemein formuliert wäre es möglich, mehrere reskalierten Instanzen des Mikroskopiebilds zu bestimmen, wobei die unterschiedlichen reskalierten Instanzen unterschiedliche Skalierungsfaktoren in Bezug auf das ursprüngliche Mikroskopiebild aufweisen. Die unterschiedlichen reskalierten Instanzen können dabei jeweils in Bezug auf die vorgegebene Zellstruktur einer entsprechenden Zellart skaliert sein. Beispielsweise wäre es möglich, dass für jede Zellart eine zugehörige Instanz des Mikroskopiebilds bestimmt wird und die Größe der jeweiligen Instanz des Mikroskopiebilds so angepasst wird, dass die Größe der vorgegebenen Zellstruktur für die jeweilige Zellart dem vorgegebenen Referenzwert entspricht. Dadurch kann dann eine jeweilige reskalierte Instanz des Mikroskopiebilds erhalten werden. Dabei wäre es denkbar, dass die Anzahl der Instanzen bzw. der Zellarten α-priori vorgegeben ist; es wäre aber auch denkbar, dass die Anzahl der Instanzen bzw. der Zellarten anhand des Mikroskopiebilds bestimmt wird.

Die unterschiedlichen Arten können in unterschiedlichen Bildteilbereichen des Mikroskopiebilds angeordnet sein. Beispielsweise können die unterschiedlichen Arten in unterschiedlichen Bildteilbereichen des Mikroskopiebilds dominant sein, das heißt überwiegend vorkommen, im Vergleich zu anderen Arten. Die Arten können also auch mit den zugehörigen Bildteilbereichen assoziiert sein, in denen die jeweilige Art auftritt oder dominiert.

Dabei können unterschiedliche Techniken eingesetzt werden, um Bildteilbereiche, die mit einer bestimmten Art assoziiert sind, zu bestimmen. Einige beispielhafte Techniken sind nachfolgend im Zusammenhang mit TAB. 1 beschrieben.

**TAB. 1: Verschiedene Techniken, um Zellarten in einer jeweiligen Instanz des Mikroskopiebilds zu lokalisieren bzw. entsprechende Bildteilbereiche zu erkennen.**

| | |
|---|---|
| Objekterkennung | Ein oder mehrere Bildteilbereiche können basierend auf einer Objekterkennung zu bestimmen. Es können gezielt Zellen einer bestimmten Zellart basierend auf charakteristischen Merkmalen erkannt werden, z.B. Form. |
| | Die Objekterkennung könnte die Erscheinungsbilder der mehreren Zellarten als Vorwissen verwenden. Zum Beispiel wäre es denkbar, dass Vorwissen über die Abbildungsgröße verschiedener Zellarten vorhanden ist. Zum Beispiel könnte ein solches Vorwissen durch eine Benutzereingabe erhalten werden. Es wäre auch denkbar, dass solches Vorwissen bestimmt wird, zum Beispiel basierend auf Eigenschaften der Bildgebungsmodalität, zum Beispiel basierend auf einem Vergrößerungsfaktor. |
| | In anderen Beispielen wäre es aber auch denkbar, dass die Objekterkennung die Erscheinungsbilder der mehreren Zellarten vorhersagt. Ein solches Szenario kann insbesondere dann hilfreich sein, wenn die Anzahl der verschiedenen Arten von vorneherein nicht fest vorgegeben ist bzw. offen verbleibt. |
| Bild-zu-Bild-Transformation | Beispielsweise könnte ein maschinengelernter Algorithmus auf das Mikroskopiebilds angewendet werden. Dieser kann einen Skalierungsfaktor für das Skalieren kontinuierlich oder diskret ausgeben, für jeden Pixel. Dies entspricht einer Bild-zu-Bild-Transformation. Es wäre dann möglich, diesen Skalierungsfaktor zu glätten. |
| | Die unterschiedlichen Bildteilbereiche entsprechen dann den Bereichen, in denen die Skalierungsfaktoren unterschiedliche Werte annehmen. |
| Clustering-Algorithmus | Die ein oder mehreren Bildteilbereiche mit einem Clustering-Algorithmus bestimmt werden. Der Clustering-Algorithmus kann durch unüberwachtes Lernen trainiert werden. Dieser kann basierend auf Clustern entsprechender Erscheinungsbilder die mehreren Zellarten bestimmen und lokalisieren. |
| | Beispielsweise könnte ein maschinengelernter Algorithmus verwendet werden. Zum Beispiel könnte eine maschinengelernter Kodier-Zweig, der das Mikroskopiebild kodiert, verwendet werden. Dann könnten die Cluster basierend auf einem Abstand von latenten Merkmalsrepräsentationen bestimmt werden. Es könnten z.B. Pixel- oder Patchweise latente Merkmalsrepräsentationen eines CNNs verwendet werden. |
| | Die Cluster können zum Beispiel basierend auf einer Segmentierung, etwa von Kontrastwerten des Mikroskopiebilds bestimmt werden. |
| | Die Cluster könnten auch basierend auf der Ausgabe einer Bild-zu-Bild-Transformation gemäß dem vorangegangenen Beispiel dieser Tabelle bestimmt werden. Das bedeutet, dass Cluster eines entsprechenden Anpassungsparameters, der Pixel-weise bestimmt werden kann, ermittelt werden können. |
| | In manchen Szenarien wäre es denkbar, dass Vorwissen über die Anzahl der Arten, die Mikroskopiebild wiedergegeben werden, vorhanden ist. Es wäre dann möglich, dass die Anzahl der Arten als Randbedingung des Clustering-Algorithmus vorgegeben ist. |
| | Beispielsweise könnte ein k-means Algorithmus verwendet werden, wenn Vorwissen über die Zellarten im Mikroskopiebild vorhanden ist. Beispiel: Es sind die zulässigen Skalierungsfaktoren bekannt. In solchen Beispielen ist die Anzahl der Arten festgelegt. |
| | Es wäre aber auch möglich, dass kein Vorwissen über die Zellarten vorhanden ist. Dann kann die Cluster-Anzahl dynamisch bestimmt werden. Es könnte ein Latent Dirichlet Allocation Algorithmus verwendet werden. |

Nachfolgend wird eine beispielhafte Technik beschrieben, um eine Anzahl der Zellarten und ggf. eine Lokalisierung der Zellarten im Mikroskopiebild zu bestimmen. Diese beispielhafte Implementierung verwendet insbesondere eine Kombination der Techniken aus TAB. 1. Dazu kann eine Segmentierung einer Karte erfolgen, welche das Auftreten der Zellarten im Mikroskopiebild beschreibt. Die Karte kann also für verschiedene Bildpositionen des Mikroskopiebilds angeben, ob dort jeweils eine bestimmte Zellart vorkommt. Das Ergebnis der Segmentierung kann dann mehrere Teilbereiche indizieren, in denen eine Art vorkommt, dominant ist oder ausschließlich angetroffen wird.

Dabei können unterschiedliche Techniken verwendet werden, um eine solche Karte als Eingabe für die Segmentierung bestimmen. In einer Variante wäre es möglich, einen Objekterkennungsalgorithmus zu verwenden, der konkrete Positionen der verschiedenen Zellarten im Mikroskopiebild markiert, also beispielsweise jeweils den Mittelpunkt einer jeweiligen Zelle der Zellart. Der Objekterkennungsalgorithmus könnte dabei auf Vorwissen zum Erscheinungsbild der jeweiligen Zellart im Mikroskopiebild zurückgreifen. Zum Beispiel könnte eine Abbildungsgröße verschiedene Zellarten im Mikroskopiebild als Vorwissen mitgegeben werden (etwa basierend auf einer bekannten Strukturgröße und einem bekannten Vergrößerungsfaktor der Bildgebungsmodalität). Es könnte zum Beispiel eine geometrische Form der verschiedenen Zellarten als Vorwissen mitgegeben werden. Solches Vorwissen ist aber nicht in allen Varianten erforderlich. Manchmal könnte der Objekterkennungsalgorithmus auch selbst das Vorkommen verschiedener Zellarten ermitteln, d.h. a-priori unbekannte Klassen bzw. Zellarten erkennen. Der Objekterkennungsalgorithmus könnte selbst zum Beispiel die Abbildungsgröße einer Zellart bestimmen oder die geometrische Form im Mikroskopiebild. Ein weiteres Beispiel für die Bestimmung einer solchen Karte wäre die Verwendung eines Clustering-Algorithmus. Der Clustering-Algorithmus kann das gehäufte Auftreten von charakteristischen Signaturen ohne spezifisches Training erkennen, wobei dieses gehäufte Auftreten dann jeweils mit dem Vorhandensein einer bestimmten Zellart assoziiert werden kann. Basierend auf dem Clustering-Algorithmus kann jeweils im Ortsraum das Vorkommen einer Zellart bestimmt werden, welches dann in der Karte eingezeichnet wird. Der Clustering-Algorithmus wiederum kann auf unterschiedlichen Eingaben operieren. Beispielsweise könnte der Clustering-Algorithmus als Eingabe einen Skalierungsfaktor verwenden, der für die verschiedenen Pixel des Mikroskopiebilds oder Patch-weise basierend auf einer Bild-zu-Bild-Transformation bestimmt wird. Dann können im Ortsraum Cluster erkannt werden. Die Bild-zu-Bild-Transformation kann mit einem maschinengelernten Algorithmus durchgeführt werden. Derart könnte zum Beispiel ein Skalierungsfaktor lokal vorhergesagt werden. Dieser Skalierungsfaktor könnte zum Beispiel von Pixel zu Pixel variieren und entsprechen könnte dann das Clustering jeweils Cluster vergleichbarer Skalierungsfaktoren identifizieren. Ein weiteres Beispiel für eine Eingabe in den Clustering-Algorithmus könnte zum Beispiel basierend auf den Aktivitäten eines künstlichen neuronalen Netzwerks bestimmt werden, d.h. basierend auf den Werten eines latenten Merkmalsvektors eines maschinengelernten Algorithmus erhalten werden. Im Detail könnte ein Kodier-Zweig verwendet werden, um jeweils Pixel oder Patches des Mikroskopiebilds zu kodieren. Derart wird für jedes Pixel oder Patch ein latenter Merkmalsvektor erhalten. Die unterschiedlichen Einträge des Merkmalsvektors entsprechen der Wahrscheinlichkeit des Vorkommens einer jeweiligen Art der Struktur im betrachteten Pixel oder Patch. Zum Beispiel könnten dann entsprechend Aktivitäten für mehrere Pixel oder Patches kombiniert werden, um derart die Karte zu bilden. Noch ein weiteres Beispiel für die Eingabe in den Clustering-Algorithmus betrifft die Verwendung einer Segmentierung basierend auf Kontrastwerten. Beispielsweise könnten jeweils Segmente vergleichbarer Kontrastwerte des Mikroskopiebilds bestimmt werden. Derart kann Vordergrund von Hintergrund getrennt werden. Mit dem Clustering-Algorithmus könnte dann gezielt im Vordergrundbereich nach Clustern vergleichbarer Signaturen gesucht werden, es wäre aber auch möglich, bereits ohne die Einteilung in Vorder- und Hintergrund direkt Struktur-basiert Cluster bilden (d.h. nicht jeden Intensitätswert im Mikroskopiebild einzeln überprüft, sondern für Patches des Mikroskopiebilds anhand der Strukturen). Die letztgenannte Variante wäre dann vorteilhaft, wenn es gar keinen Hintergrund im Bild gibt, z.B. wenn die Konfluenz von Zellen bei 100% liegt.

Es ist dann möglich, dass die Schätzung der Anzahl und/oder des Konfluenzgrads der Zellen basierend auf diesen reskalierten Instanzen des Mikroskopiebild bestimmt wird. Dabei können die Bildteilbereiche, die mit den verschiedenen reskalierten Instanzen assoziiert sind, berücksichtigt werden.

Allgemein formuliert gibt es aber unterschiedliche Möglichkeiten, wie die reskalierten Instanzen des Mikroskopiebild berücksichtigt werden können. Einige Beispiele sind in TAB. 2 aufgelistet.

**TAB. 2: Verschiedene Möglichkeiten, um die Bildteilbereiche beim Bestimmen der Dichtekarte oder Konfluenzkarte zu berücksichtigen.**

| | Implementierung | Beispielhafte Details |
|---|---|---|
| I | Nachgelagertes Verwerfen von nicht relevanten Ergebnisbestandteilen | Beispielsweise wäre es denkbar, dass mehrere Dichte- oder Konfluenzkarten bestimmt werden, nämlich für jede reskalierte Instanz des Mikroskopiebilds. Es können dann jeweils solche Teile einer Karte verworfen werden, die mit anderen als den jeweils zugeordneten ein oder mehreren Bildteilbereichen assoziiert sind. Das bedeutet also, dass Teile der Dichte- oder Konfluenzkarte, die sich auf Bildteilbereiche beziehen, in denen die jeweilige Zellart nicht oder nicht dominant lokalisiert ist, verworfen werden können. |
| II | Ortsaufgelöstes Bestimmen der Dichtekarte oder Konfluenzkarte | Beim Bestimmen der Dichtekarte oder Konfluenzkarte können selektiv solche Bildteilbereiche berücksichtigt werden, die mit der jeweiligen Zellart assoziiert sind. Das bedeutet also, dass die Karten einer bestimmten Zellart von vorneherein nur für relevante Bildteilbereiche bestimmt werden. |
| III | Vorgelagertes Maskieren | Es wäre zum Beispiel denkbar, dass für jede reskalierte Instanz des Mikroskopiebilds solche Bildteilbereiche ausmaskiert werden, die nicht mit der jeweiligen Zellart assoziiert sind. Derart wird erreicht, dass die Dichtekarte oder die Konfluenzkarte keine Beiträge aufweist, die von Bildteilbereichen stammen, die nicht mit der jeweiligen Zellart assoziiert sind. |

Zum Beispiel wäre es also denkbar, dass für jede reskalierte Instanz des Mikroskopiebild eine zugeordnete Dichtekarte (vgl. FIG. 4) bestimmt wird und dann die Dichtekarten, die den verschiedenen reskalierten Instanzen zugeordnet sind, miteinander kombiniert werden. Dann kann basierend auf dieser kombinierten/aggregierten Dichtekarte die Schätzung der Anzahl der Zellen durchgeführt werden. Entsprechend könnte - alternativ oder zusätzlich zur Dichtekarte - auch eine Konfluenzkarte bestimmt werden, für jede reskalierte Instanz. In der Konfluenzkarte können jeweils die zugehörigen Konfluenzregionen für die zugehörige Zellart markiert sein. Diese Konfluenzkarte können dann miteinander kombiniert werden. Es könnten auch jeweils individuelle Teil-Schätzungen vorgenommen werden. Für jede reskalierte Instanz kann also die (Teil-)Schätzung der jeweiligen Anzahl und/oder des jeweiligen Konfluenzgrads erfolgen. Die Ergebnisse können dann miteinander kombiniert werden, um eine kombinierte Schätzung für alle Zellarten zu erhalten. Das bedeutet, dass die Auswertungen jeweils mehrfach für die verschiedenen Instanzen des reskalierten Mikroskopiebilds ausgeführt werden (wobei z.B. solche Bereiche, die andere Zellarten abbilden, als die für die jeweilige Reskalierung maßgeblich Zellart, jeweils ignoriert werden können).

Die Unterscheidung zwischen unterschiedlichen Zellarten kann dabei basierend auf einer Objekterkennung erfolgen. Zum Beispiel können unterschiedliche Zellarten unterschiedliche Formen aufweisen, etwa ellipsenförmig versus kreisförmig. Unterschiedliche Zellarten können bei Verwendung eines geeigneten Kontrasts, zum Beispiel eines geeigneten Fluoreszenz-Markers, unterschiedliche Kontrastlevel im lichtmikroskopischen Bild aufweisen.

Es gibt unterschiedliche Möglichkeiten, um die Instanzen zu bestimmen. Beispielsweise könnten jeweils Kopien des gesamten lichtmikroskopischen Bilds erstellt werden. Diese können dann in der Größe angepasst werden, gemäß einem jeweiligen Skalierungsfaktor, der mit einer entsprechenden Zellart assoziiert ist. Die nachfolgende Auswertung kann man selektiv für solche Zellen erfolgen, die in der jeweiligen Instanz mit einer bestimmten Größe abgebildet werden. Es wäre auch denkbar, dass die Instanzen unterschiedlichen Partitionen des ursprünglichen lichtmikroskopischen Bilds entsprechen. Das bedeutet, das jeweils unterschiedliche Teilbereiche bzw. Bildausschnitte des lichtmikroskopischen Bilds unterschiedlich skaliert werden können, je nachdem mit welcher Zellart die entsprechende Partition assoziiert ist. Zum Beispiel könnte eine Partition jeweils mit der dort dominant auftretenden Zellart bzw. mehrheitlich auftretenden Zellart assoziiert sein. Beispielsweise könnte ein nicht-überwachter Objekterkennungsalgorithmus verwendet werden, um Zellen verschiedener Zellarten zu erkennen und zu lokalisieren; basierend auf dem entsprechenden Ergebnis könnten dann die Partitionen bestimmt werden. Eine solche nicht-überwachte Objekterkennung könnte z.B. charakteristische Merkmale der Zellen, z.B. die Größe, berücksichtigen.

Optional könnte eine Plausibilisierung des Skalierungsfaktors erfolgen. Wird zum Beispiel festgestellt, dass der Skalierungsfaktor außerhalb eines vorgegebenen Bereichs ist, könnte eine Warnung an den Benutzer ausgegeben werden. Es wäre auch denkbar, dass bei fehlgeschlagener Plausibilisierung eine erneute Iteration der Anpassung der Größe des lichtmikroskopischen Bilds durchgeführt wird. Es könnte alternativ oder zusätzlich über eine Benutzerschnittstelle abgefragt werden, ob der Skalierungsfaktor akzeptabel ist. Es könnte ein vom Benutzer festzulegender Skalierungsfaktor abgefragt werden. Beispielsweise könnte ein Konfidenzniveau für den Skalierungsfaktor bestimmt werden. Z.B. könnte das Konfidenzniveau als Ausgabe eines entsprechenden maschinengelernten Algorithmus erhalten werden. Wenn das Konfidenzniveau zu niedrig ist, kann die Plausibilisierung fehlschlagen. Es könnte zum Beispiel überprüft werden, ob der Skalierungsfaktor in einem vorgegebenen Bereich liegt. Zum Beispiel könnte überprüft werden, ob der Skalierungsfaktor nicht größer als ein vorgegebener oberer Schwellenwert ist und/oder nicht kleiner als ein vorgegebener unterer Schwellenwert ist.

Anschließend, nach der Reskalierung, kann dann in Box 3115 die Schätzung der Anzahl der Zellen bestimmt werden und/oder in Box 3120 die Schätzung des Konfluenzgrads bestimmt werden (zuvor können optional noch Bildränder entfernt werden oder Patches extrahiert werden).

Als allgemeine Regel wäre es denkbar, dass Box 3115 und Box 3120 durch unterschiedliche Algorithmen implementiert werden. Es wäre auch denkbar, dass Box 3115 und Box 3120 durch einen gemeinsamen Algorithmus implementiert werden.

Es wäre denkbar, dass Box 3110 und Box 3115 und/oder Box 3120 durch einen gemeinsamen Algorithmus implementiert werden. Das bedeutet, dass die Reskalierung und anschließende Auswertung in Box 3115 und/oder 3120 durch einen Algorithmus integriert umgesetzt werden kann.

Optional kann dies getrennt für verschiedene Zellarten erfolgen, z.B. basierend auf mehreren Instanzen des reskalierten Mikroskopiebilds. Die Schätzungen könnten aber auch Zellart-agnostisch durchgeführt werden, z.B. insbesondere, wenn die mehreren reskalierten Instanzen des Mikroskopiebilds fusioniert werden.

Indem eine Reskalierung in Box 3110 verwendet wird, kann die Komplexität eines Auswertungsalgorithmus, der in Box 3115 und/oder in Box 3120 verwendet wird, reduziert werden. Beispielsweise könnte als Auswertungsalgorithmus auch ein ML Algorithmus verwendet werden, beispielsweise ein KNN. In einem solchen Fall kann das Training des Auswertungsalgorithmus (vergleiche FIG. 2: Box 3005) auf Trainingsdaten beschränkt werden, welche die Zellen derart abbilden, dass die Zellstruktur eine Größe gemäß dem vorgegebenen Referenzwert aufweist. Zum Beispiel könnte ein vorgegebenen Referenzwert verwendet werden, der eine vergleichsweise kleinen Bildgröße entspricht. Dadurch kann die Größe der verwendeten Operatoren des ML Algorithmus reduziert werden. Die Anzahl der Rechenoperationen kann reduziert werden. Dadurch ist auch eine recheneffiziente Implementierung auf mobilen Geräten, etwa auf einem Prozessor eines Lichtmikroskops, möglich.

Zum Beispiel könnten zum Bestimmen der Schätzung der Anzahl der Zellen in Box 3115 Lokalisierung-freie Ansätze verwendet werden, das heißt die Anzahl der Zellen wird direkt basierend auf den Bildern geschätzt. Dies kann durch eine ordinale Regression durchgeführt werden oder einer Patch-basierten Vorhersage und Aggregation. Solche Techniken basieren also auf einer globalen Analyse der Eingangsbilder. Es ist nicht erforderlich, die Position einzelner Zellen aufzulösen. Eine entsprechende beispielhafte Technik ist beschrieben in: Paul Cohen, Joseph, et al. "Count-ception: Counting by fully convolutional redundant counting." Proceedings of the IEEE International conference on computer vision workshops. 2017. Eine weitere Technik basiert auf der Vorhersage der Positionen der Zellenmittelpunkte. Solche Techniken sind zum Beispiel grundsätzlich beschrieben in: Xie, Weidi, J. Alison Noble, and Andrew Zisserman. "Microscopy cell counting and detection with fully convolutional regression networks." Computer methods in biomechanics and biomedical engineering: Imaging & Visualization 6.3 (2018): 283-292. Dabei wird also ein ML Algorithmus, etwa ein KNN, verwendet, der basierend auf dem (z.B. reskalierten) Mikroskopiebild eine Dichtekarte bereitstellt. Diese Dichtekarte kodiert die Wahrscheinlichkeit für die An- oder Abwesenheit von Zellen als Funktion der Position im Bild. Die Anzahl der Zellen kann ein basierend auf der Dichtekarte bestimmt werden. Als KNN kann zum Beispiel ein Faltungsnetzwerk verwendet werden. Zum Beispiel kann eine U-Netz-Architektur verwendet werden, angelehnt an Ronneberger, Olaf, Philipp Fischer, and Thomas Brox. "U-net: Convolutional networks for biomedical image segmentation." International Conference on Medical image computing and computer-assisted intervention. Springer, Cham, 2015. Es kann einen Bild-zu-Bild Regression durchgeführt werden. An jedem Zellmittelpunkten kann eine vorgegebene Dichteverteilung zentriert werden, etwa eine 2-D Gaußfunktion. Insbesondere in einem solchen Szenario weist das Anpassen der Größe des Mikroskopiebilds in Box 3110 den Vorteil auf, dass nur eine einzige Zellgröße vom entsprechenden Modell zur Erstellung der Dichtekarte abgedeckt werden muss. Die Anzahl der Zellen kann dann durch Integration über die Dichtekarte bestimmt werden. Es könnten die Mittelpunkte der Zellen lokalisiert werden, basierend auf einem Schwellenwert-Ansatz und zum Beispiel einer Unterdrückung von eng beieinanderliegenden lokalen Peaks. Zum Beispiel kann eine sog. non-maximum suppression (NMS)-Operation verwendet werden. Aufgrund der reskalierten Größe des Bilds (Box 3110), können solche Filter eine feste Parametrisierung aufweisen.

In manchen Beispielen könnten auch mehrere Dichtekarten erhalten werden, die jeweils die Wahrscheinlichkeit für die An- oder Abwesenheit von Zellen einer bestimmten Zellart kennzeichnen. Es wäre auch denkbar, dass eine einzelne Dichtekarte zwischen unterschiedlichen Zellarten unterscheidet, z.B. durch unterschiedliche Wertebereiche oder Bounding-Boxen oder durch Zusatzinformation. In solchen Szenarien kann eine Schätzung der Anzahl der Zellen für unterschiedliche Zellarten aufgelöst erfolgen.

Grundsätzlich kann die Schätzung der Anzahl der Zellen in Box 3115 und die Schätzung des Konfluenzgrads der Zellen in Box 3120 mittels eines gemeinsamen Auswertungsalgorithmus zusammen bestimmt werden. Es wäre aber auch möglich, dass getrennte Auswertealgorithmen zum Bestimmen der Schätzung der Anzahl der Zellen in Box 3115 und zum Bestimmen des Konfluenzgrads der Zellen in Box 3120 verwendet werden.

Es gibt unterschiedliche Möglichkeiten, um die Schätzung des Konfluenzgrads in Box 3120 zu bestimmen. Zum Bestimmen der Schätzung des Konfluenzgrads kann zum Beispiel ein heuristischer Auswertungsalgorithmus verwendet werden. Zum Beispiel können Konturen der Zellen aufgefunden werden. Beispielsweise kann eine Schwellenwert-Analyse durchgeführt werden und dann in der derart erhaltenen Maske geeignete Konturen gemäß vorgegebenen Referenzformen aufgefunden werden. Diese Konturen können den Umfang der Zellen bezeichnen und damit Konfluenzregionen beschreiben. Derart kann dann eine Konfluenzkarte bereitgestellt werden, die die Konfluenzregionen maskiert. Basierend auf den Konfluenzregionen kann dann wiederum die Schätzung des Konfluenzgrads bestimmt werden. Eine solche Konfluenzkarte könnte aber auch basierend auf einem maschinengelernten Auswertungsalgorithmus verwendet werden. Zum Beispiel könnte ein Faltungsnetzwerk verwendet werden, um eine binäre Segmentierung zur Erstellung der Maskierung der Konfluenzregionen bereitzustellen. Es könnte wiederum eine U-Netzarchitektur verwendet werden. Als weiterer Ansatz zur Schätzung des Konfluenzgrads könnte eine semantische Segmentierung erfolgen. Derart kann wiederum eine binäre Maskierung der Konfluenzregionen erfolgen. Dabei ist es nicht erforderlich, eine Trennung von benachbarten Zellen durchzuführen, weil keine Zählung von Zellen oder Abgrenzung benachbarter Zellen erforderlich ist, um den Konfluenzgrads zu bestimmen.

Auch der Konfluenzgrad kann basierend auf einer Dichtekarte geschätzt werden. Dazu kann z.B. eine mittlere Zellgröße angenommen werden und jeweils jeden Zellmittpunkt zugeordnet werden. Die Lokalisierung der Zellmittepunkte kann aus der Dichtekarte bestimmt werden.

Wenn mehrere Arten von Auswertealgorithmen zur Verfügung stehen, könnte ein automatischer Auswahl des geeigneten Auswertungsalgorithmus erfolgen. Dabei kann es unterschiedliche Auswahlkriterien geben. Zum Beispiel könnte der geeignete Auswertungsalgorithmus in Abhängigkeit von einer Art des Experiments ausgewählt werden oder in Abhängigkeit von einer Art der Probe. Beispiel könnte die Art der Probe basierend auf einem Übersichtsbild oder basierend auf einer Benutzereingabe bestimmt werden. Dies betrifft nicht nur die Auswertung, sondern zum Beispiel auch die Auswahl eines geeigneten Modells zur Anpassung eines bestehenden Modells mit neuen aufgezeichneten Daten, im Rahmen eines wiederholten Trainings, vergleiche FIG. 2: Box 3005.

Wird sowohl die Schätzung der Anzahl der Zellen in Box 3115 wie auch die Schätzung des Konfluenzgrads der Zellen in Box 3120 bestimmt, so kann anschließend in Box 3125 eine Kreuz-Plausibilisierung der Schätzung der Anzahl der Zellen und der Schätzung des Konfluenzgrads durchgeführt werden. Das bedeutet, dass überprüft werden kann, ob die Schätzung der Anzahl der Zellen konsistent ist mit der Schätzung des Konfluenzgrads, und/oder andersherum. Das bedeutet, dass die Schätzung der Anzahl der Zellen oder eine daraus abgeleitete oder zugrunde liegende Größe verglichen werden kann mit der Schätzung des Konfluenzgrads oder einer daraus abgeleiteten oder zugrunde liegenden Größe. Zum Beispiel könnte die Kreuz-Plausibilisierung in Box 3125 eine Überprüfung umfassen, ob in einer Konfluenzregion jeweils eine Zelle angeordnet ist. Beispielsweise kann überprüft werden, ob jeweils ein Zellmittelpunkt oder eine bestimmte Zellstruktur, etwa der Zellkern, in einer Konfluenzregion angeordnet ist. Der Zellmittelpunkt kann aus einer Dichtekarte wie hierin beschrieben ermittelt werden (als lokales Maximum). Alternativ oder zusätzlich könnte die Kreuz-Plausibilisierung auch eine Bestimmung einer Varianz einer Ortsraumdichte von Zellen innerhalb von Konfluenzregionen umfassen. Das bedeutet also, dass überprüft werden kann, ob die Ortsraumdichte der Zellen selektiv innerhalb der Konfluenzregionen betrachtet, als Funktion des Ortes variiert. Damit können Kriterien überprüft werden, wie: Enthält jede vorhergesagte Konfluenzregion in etwa die gleiche Zellmittelpunkt-Anzahl je Einheitsfläche, d.h. ist die vorhergesagte Zelldichte für alle vorhergesagten Konfluenzregionen vergleichbar; und/oder gibt es Punkte innerhalb einer Konfluenzregion, welche auffällig weit von einer Zellmittelpunkt-Vorhersage entfernt liegen (mehr als ~3x Zelldurchmesser)? Liegt eine solche signifikante Variation vor, kann das ein Hinweis dafür sein, dass entweder die Anzahl der Zellen oder der Konfluenzgrads oder beides falsch geschätzt wurden.

Alternativ oder zusätzlich zur Varianz der Ortsraumdichte könnte auch der Absolutwert der Ortsraumdichte der Zellen innerhalb der Konfluenzregionen berücksichtigt werden.

Neben einer solchen expliziten Kreuz-Plausibilisierung in Box 3125 wäre es auch denkbar, dass die Analysealgorithmen, die für die Bestimmung der Schätzung der Anzahl in Box 3115 und die Bestimmung der Schätzung des Konfluenzgrads in Box 3120 verwendet werden, gemeinsam trainiert werden, so dass die Ergebnisse kreuzweise plausibel bzw. konsistent sind. Das bedeutet, dass die Konsistenz im Training erzwungen werden kann und dann zur Inferenz implizit vorliegt. Das Training findet in Box 3005, vergleiche FIG. 2, statt. Details dazu werden im Zusammenhang mit Box 3520 in FIG. 8 beschrieben.

Box 3110 bis Box 3125 sind echtzeitfähig. Das bedeutet, dass eine Latenz zwischen dem Erhalten des Bilds in Box 3105 und dem Durchführen der nachfolgenden Prozessschritte besonders kurz sein kann, etwa kürzer als eine halbe Sekunde oder kürzer als 100 ms.

FIG. 8 ist ein Flussdiagramm eines beispielhaften Verfahrens. FIG. 8 illustriert Aspekte im Zusammenhang mit dem Training von Auswertungsalgorithmen zur Auswertung von Mikroskopiebildern. Die Auswertung kann der Schätzung der Anzahl und/oder des Konfluenzgrads der Zellen, die von den Mikroskopiebildern abgebildet werden, dienen. Beispielsweise kann das Verfahren aus FIG. 8 von einer Datenverarbeitungseinrichtung ausgeführt werden, die in Kommunikationsverbindung mit einem Mikroskop oder einer anderen Bildgebungseinrichtung steht. Beispielweise könnte das Verfahren aus FIG. 8 von der Vorrichtung 101 ausgeführt werden, insbesondere vom Prozessor 102 basierend auf Programmcode, welcher der Prozessor 102 aus dem Speicher 103 lädt und ausführt.

Das Verfahren aus FIG. 8 ist eine beispielhafte Implementierung der Box 3005.

Das Verfahren auf FIG. 8 basiert auf der Erkenntnis, dass es aufwendig sein kann, Label zu generieren, die dann für das Trainieren von ML Algorithmen verwendet werden. Label werden oftmals durch händisches Annotieren erzeugt. Das ist zeitaufwendig und manchmal subjektiv. Gerade bei der Zellzählung und Konfluenzmessung von Mikroskopiebildern, die im Durchlicht mit z.B. Phasenkontrast aufgenommen wurden, kann dies sehr aufwendig werden. Es wird daher eine Lösung zum Training gemäß FIG. 8 bereitgestellt, die die manuelle Annotation weitestgehend überflüssig macht und zu objektiven Resultaten führt. Ein automatisiertes Training ist möglich.

Mit der geeigneten Kombination aus Durchlicht- und Fluoreszenzkontrasten zum Training kann ein zuverlässiges Training von Auswertungsalgorithmen erfolgen. Hierzu wird beispielsweise ein Fluoreszenzmarker verwendet, der die Zellkerne färbt (z.B. DAPI, Hoechst, PI) und einen weiteren Marker der die Zellausdehnung (Fläche) bzw. Zellbegrenzung widerspiegelt. Dies ist bspw. mit einer Färbung der Plasmamembran möglich. Derart lassen sich Trainingsdaten für das Zählen von Zellen sowie die Bestimmung des Konfluenzgrads aus Phasenkontrastbildern automatisch und ohne manuelle Annotationen zu erzeugen. Es ist insbesondere ein automatisiertes Training möglich.

In Box 3505 für den Mikroskopiebild erhalten. Dieses umfasst mehrere Kanäle. Die verschiedenen Kanäle bilden jeweils eine Vielzahl von Zellen mit einem zugehörigen Kontrast ab.

Die verschiedenen Kanäle sind miteinander registriert. Das bedeutet, dass eine Zuordnung von Bildpunkten existiert. Die Registrierung könnte optional auch durchführt werden.

Zumindest ein Referenz-Kanal der mehreren Kanäle dient der Erzeugung von Vorwissen bzw. Labeln und umfasst dazu ein jeweiliges Fluoreszenzbild. Ein solches Fluoreszenzbild bildet die Vielzahl von Zellen mit einem Kontrast ab, der spezifisch für eine jeweilige fluoreszierende Zellstruktur ist. Unterschiedliche Referenz-Kanäle können dabei unterschiedliche Fluoreszenz-Kontraste aufweisen. Beispielsweise könnte ein erster Referenz-Kanal einen Fluoreszenzkontrast aufweisen, bei welchem der Zellkern markiert ist. Ein zweiter Referenz-Kanal könnte einen Fluoreszenzkontrast aufweisen, bei welchem das Zellskelett markiert ist. Anstatt aus Zellkernfärbungen (DAPI, Hoechst, ...) kann die Information über Zellmittelpunkte alternativ auch aus anderen Färbungen extrahiert. Beispiel: auf Basis von Cytoskelett-Färbung. Dort sind die Zellkerne als "Löcher" in der Färbung erkennbar. Es könnte z.B. für die Konfluenzkarte ein Fluoreszenzkontrast verwendet werden, der wie folgt färbt: Aktin; Mikrotubuli (eventuell konvexe Hülle bilden); Plasmafärbung; Plasmamembranfärbung (eventuell füllen der entstehenden Segmente in Richtung Zellkern); oder eine Kombination daraus. Hier können also flächige Zellstrukturen gefärbt werden.

Die Fluoreszenzkanäle müssen nicht exakt im Fokus sein, da bei deren Verarbeitung typischerweise nur die "niederfrequenten" Informationen von Interesse sind (bei klassischen Algorithmen erfolgt in der Regel sogar oft ein explizites Tiefpass-Filtern).

Sind mehrere Referenz-Kanäle vorhanden, so können die Dichtekarte und die Konfluenzkarte basierend auf unterschiedlichen Referenz-Kanälen bestimmt werden. Der jeweilige Referenz-Kanal kann in Abhängigkeit eines jeweiligen Kontrasts ausgewählt werden. Dies kann automatisch erfolgen.

Die Dichtekarte und/oder die Konfluenzkarte können jeweils basierend auf mehreren Fluoreszenzbildern bestimmt werden, d.h. es können mehrere Fluoreszenzbilder zusammen genutzt werden. Beispiel: Nutzen von Cytoskelett- und Zellmembran-Färbungen (z.B. durch Bilden der Schnittmenge), um Konfluenzkarte noch robuster zu bestimmen

Die Kanäle umfassen auch einen Trainings-Kanal. Dieser ist verschieden von den ein oder mehreren Referenz-Kanälen. Dieser kann zum Beispiel ohne Fluoreszenz-kontrast erfasst werden, das heißt zum Beispiel mittels Phasenkontrast. Es wäre aber auch möglich, dass auch der Trainings-Kanal mit einem Fluoreszenzkontrast erfasst wird. Der Trainings-Kanal beinhaltet ein Trainings-Mikroskopiebild. Die entsprechende Bildgebungsmodalität entspricht der später bei Inferenz (Box 3010) verfügbaren Bildgebungsmodalität (wohingegen Kontraste der ein oder mehreren Referenz-Kanäle bei Inferenz nicht verfügbar sind).

Für das Erhalten des Mikroskopiebilds in Box 3505 gibt es unterschiedliche Implementierungsvarianten. Beispielsweise könnte Box 3505 das Ansteuern mindestens einer Bildgebungsvorrichtung zum Erfassen eines Mikroskopiebilds bzw. einzelner Kanäle des Mikroskopiebilds umfassen. Dies könnte aktiv vom Benutzer ausgelöst werden, zum Beispiel durch Drücken eines Knopfes, etwa einer grafischen Benutzerschnittstelle. Es könnte auch ein bereits existierendes, vorher gespeichertes Mikroskopiebild geladen werden. Der Benutzer könnte ein Mikroskopiebild manuell laden. Es könnte auch ein Mikroskopiebild automatisch erfasst werden. Der Erfassungszeitpunkt kann dabei vordefiniert sein, zum Beispiel in regelmäßigen zeitlichen Abständen während eines Experiments, oder adaptiv festgelegt werden. Zum Beispiel könnte in Abhängigkeit von einem Ereignis die Erfassung ausgelöst werden.

Es wäre möglich, dass eine Vorverarbeitung des Mikroskopiebilder erfolgt. Zum Beispiel könnten nicht-transfizierte Zellen aufgefunden und korrigiert werden. Schmutz, Dreck oder Fremdkörper oder andere Bildstörungen können erkannt und gegebenenfalls entfernt werden. Entsprechende Techniken sind beschrieben in DE 10 2020 126 554 und DE 10 2021 114 351.

Zum Beispiel könnten Zellen am Bildrand, die nur teilweise sichtbar sind, entfernt werden. Es könnte noch geometrische Figuren, zum Beispiel Ellipsen, die teilweise sichtbaren Zellen gefiltert werden, um derart eine Bestimmung des Mittelpunkts oder des Umfangs für die Konfluenzkarte zu ermöglichen.

Optional kann in Box 3506 Kontextinformation zum Mikroskopiebild aus Box 3505 erhalten werden. Beispielhafte Kontextinformation umfasst: frühere Schätzungen; Benutzer; Zellart; verwendete Bildgebungsmodalität; Vergrößerungsfaktor einer Objektiv-Linse einer Bildgebungsvorrichtung; Typ der Objektiv-Linse; Kamera oder Kameraadapter; Mikroskopeinstellungen; Vorwissen zur Geometrie der Zellen oder zum Erscheinungsbild der Zellen; Vorwissen über eine räumliche Verteilung der Zellen; Vorwissen zu einer Helligkeitsverteilung von Zellen.

Die Kontextinformation könnte z.B. aus einem Bild-Header des Mikroskopiebilds geladen werden oder von einem Benutzer eingegeben werden.

Die Kontextinformation kann beim Training des Algorithmus berücksichtigt werden, z.B. beim Bestimmen von Ground-Truth (Box 3515) und/oder als weitere Trainingseingabe (Box 3520).

Optional kann dann in Box 3510 die Größe des Mikroskopiebilds angepasst werden. Insbesondere kann die Größe des Bilds derart angepasst werden, dass die Größe einer vorgegebenen Zellstruktur einem vorgegebenen Referenzwert entspricht. Entsprechende Techniken wurden voranstehend im Zusammenhang mit Box 3110 aus FIG. 7 beschrieben.

Anschließend wird in Box 3515 eine Dichtekarte und/oder eine Konfluenzkarte basierend auf ein oder mehreren Fluoreszenzbildern des mindestens einen Referenz-Kanals bestimmt. Dies kann automatisiert erfolgen, d.h. es wird kein manuelles Annotieren / Labeling benötigt. Es kann Kontextinformation aus Box 3506 berücksichtigt werden. Z.B. kann eine Kombination mehrerer Referenz-Kanäle verwendet werden, um die Dichtekarte und/oder die Konfluenzkarte zu bestimmen, was z.B. hilfreich sein kann, wenn unterschiedliche Referenz-Kanäle unterschiedliche Fluoreszenzkontraste aufweisen, die komplementäre Zellstrukturen kennzeichnen. Aspekte im Zusammenhang mit einer Dichtekarte 95 wurden bereits im Zusammenhang mit FIG. 4 beschrieben. Aspekte im Zusammenhang mit einer Konfluenzkarte 96 wurden bereits im Zusammenhang mit sechs beschrieben.

Anschließend kann man in Box 3520 ein Auswertungsalgorithmus basierend auf der Dichtekarte und/oder der Konfluenzkarte als Grundwahrheit bzw. Label trainiert werden. Der Trainingskanal dient als Eingabe für das Training. Die Trainingseingabe könnte auch Kontextinformation umfassen, aus Box 3506.

Eine Verlustfunktion kann also eine Abweichung zwischen der Ausgabe des Auswertungsalgorithmus und der Dichtekarte und/oder der Konfluenzkarte bestrafen. Z.B. könnte eine Pixel-weise Abweichung betrachtet werden.

Werden in Box 3520 mehrere ML Verarbeitungspfade von ein oder mehreren ML Algorithmen trainiert, die einmal die Dichtekarte und einmal die Konfluenzkarte ausgeben, kann auch eine Verlustfunktion berücksichtigt werden, die beide Vorhersagen mischt. Dadurch kann eine konsistente Schätzung von Anzahl und Konfluenzgrad erreicht werden. Zum Beispiel wäre es denkbar, dass die Schätzung der Anzahl der Zellen unter Verwendung eines ersten ML Verarbeitungspfads stattfindet und die Schätzung des Konfluenzgrads unter Verwendung eines zweiten ML Verarbeitungspfads stattfindet. Der erste maschinengelernte Verarbeitungspfad der zweite ML Verarbeitungspfad können Teil eines einzelnen Analysealgorithmus sein oder können Teil unterschiedliche Analysealgorithmen sein. Das Training des ersten ML Verarbeitungspfads und das Training des zweiten ML Verarbeitungspfads können auf einer Verlustfunktion basieren, die die Abwesenheit von Zellen in der Konfluenzregion bestraft und/oder die die Anwesenheit von Zellen in einer Konfluenzregion belohnt. Alternativ oder zusätzlich könnte eine Verlustfunktion berücksichtigt werden, welche eine Varianz der Ortsraumdichte der Zellen innerhalb von Konfluenzregionen bestraft.

Es gibt verschiedene Möglichkeiten, um in Box 3515 die Dichtekarte und/oder die Konfluenzkarte als Vorwissen zu bestimmen, basierend auf den ein oder mehreren Referenz-Kanälen. Beispielsweise wäre es möglich, dass die Dichtekarte und/oder die Konfluenzkarte basierend auf einem weiteren ML Algorithmus erstellt werden, der eine Bild-zu-Bild-Transformation vom jeweiligen Fluoreszenzbild eines Referenz-Kanals zur Dichtekarte und/oder zu Konfluenzkarte bereitstellt. Solche Techniken beruhen auf der Erkenntnis, dass das Bestimmen einer Dichtekarte und/oder Konfluenzkarte basierend auf einem Fluoreszenzbild besonders robust durchgeführt werden kann, insbesondere auch für verschiedene Zellarten. Dies kann durch den deterministischen Charakter des Fluoreszenzkontrasts in Bezug auf spezielle Zellstrukturen erreicht werden. Deshalb kann es möglich sein, einen zuverlässigen ML Algorithmus zum Bestimmen der Dichtekarte und/oder zum Bestimmen der Konfluenzkarte basierend auf einem Fluoreszenzkontrast zu verwenden, wo dies zum Beispiel für einen einfachen Phasenkontrast nicht möglich oder nur eingeschränkt möglich wäre.

Alternativ oder zusätzlich wäre es auch möglich, Zellmittelpunkte basierend auf den Fluoreszenzbildern des mindestens einen Referenzkanals zu lokalisieren. Dann könnten vorgegebenen Dichteverteilungen an den Zellmittelpunkten zentriert werden, zum Beispiel Gauß-Dichteverteilungen mit vorgegebener Halbwertsbreite. Die Summe dieser Dichteverteilungen ergibt dann die Dichtekarte.

Das Lokalisieren von Zellmittelpunkten kann zum Beispiel das Anwenden einer Schwellenwert-basierten Segmentierungsoperation auf die Fluoreszenzbilder des mindestens einen Referenz-Kanals umfassen, um derart eine Vordergrund-Maske zu erhalten. Ein Beispiel für eine solche Schwellenwert-Operation ist ein Otsu-Algorithmus. Es können dann Einzelsegmenten der Vordergrund Maske erkannt werden. Diese Einzelsegmenten können jeweils mit Zellen assoziiert werden. Es können dann die geometrischen Mittelpunkte der Einzelsegmente als Zellmittelpunkte bestimmt werden.

Auf die Vordergrund-Maske könnten optional ein oder mehrere morphologische Operationen angewendet werden. Derart kann die Morphologie der Vordergrund-Maske modifiziert werden. Beispielsweise können kleine Löcher geschlossen werden, kleine Inseln können entfernt werden, usw. Derart können Artefakte der Segmentierungsoperation entfernt werden.

Einzelsegmente können zum Beispiel mittels Kontur-Findung oder Blob-Detektion oder Ellipsen-Anpassung ermittelt werden. Es könnte auch eine Filterung der Einzelsegmenten nach Größe und/oder Form erfolgen. Eine Glättung könnte erfolgen.

Insbesondere könnte das Erkennen von Einzelsegmenten auf Vorwissen betreffend Geometrie der Zellen basierend. Die Vordergrund-Maske könnte basierend auf solchem Vorwissen über die Geometrie der Zellen gefiltert werden.

Es könnte auch Vorwissen über eine räumliche Verteilung der Zellen berücksichtigt werden. Zum Beispiel könnte überprüft werden, ob bestimmte Segmente in Übereinstimmung mit dem Vorwissen für die räumliche Verteilung angeordnet sind.

Alternativ oder zusätzlich wäre es auch denkbar, dass Vorwissen über eine Helligkeitsverteilung der Zellen berücksichtigt wird. Derart könnte zum Beispiel basierend auf Pixelwerten überprüft werden, ob die Segmente Zellen abbilden oder nicht. Solches und weiteres Vorwissen kann z.B. anhand von Kontextinformation (vgl. FIG. 8, Box 3506) bestimmt sein oder fest vorgegeben sein.

Bei der Zellteilung können zwei Zellkern sehr nahe beieinanderliegen. Es wurde beobachtet, dass eine solche benachbarte Anordnung von Zellkernen einen Algorithmus zum Lokalisieren der Zellmittelpunkte negativ beeinträchtigen kann. Deshalb können solche Sonderfälle gezielt erkannt werden. Etwa könnte eine Analyse der Form der Segmente durchgeführt werden: liegen zum Beispiel Segmente vor, die eine signifikante Abweichung von einer Ellipsenform aufweisen, so kann dies als Hinweis auf das Vorliegen einer Zellteilung gewertet werden, also als Zellteilungsereignis. Eine entsprechende Region könnte dann ignoriert werden und/oder eine Benutzerabfrage könnte ausgelöst werden. Es können auch mehrere Ellipsen angepasst werden, zum Beispiel mit einer Optimierung mit einem Expectation-Maximization-Algorithmus.

Auch die Konfluenzkarte kann zum Beispiel mittels einer Schwellenwert-basierten Segmentierungsoperation, gegebenenfalls nach einer vorgelagerten Glättungsoperation wie beispielsweise einem Tiefpassfilter, erhalten werden. Auch können morphologische Operationen und/oder Filter angewendet werden.

Wird z.B. eine Zellstruktur gefärbt, welche sich vom Zellkern Richtung Zellmembran ausbreitet (z.B. Aktin, Mikrotubuli), dann kann eine richtungsabhängige Glättung der Vordergrund-Maske erfolgen, und zwar in orthogonaler Richtung zu den Strukturen.

Dadurch werden die Strukturen innerhalb der Zelle geglättet, es werden die Intensitäten aber nicht über die Zellmembran hinausgetragen. Dadurch liegt die Grenze der so bestimmen Konfluenzregionen unter Umständen noch exakter an der eigentlichen Zellmembran.

Allgemein kann bei der Filterung der Vordergrund-Maske Kontextinformationen genutzt werden. Beispielsweise könnte Wissen über die zu erwartende Zellgröße (in Pixeln) verwendet werden, um z.B. Glättungsoperation (insbesondere Größe des Gauß-Kernels) auf diese anzupassen. Wissen über Zelltyp oder Experimenttyp kann verwendet werden, um Parameter (z.B. Filtergröße, Schwellwert, etc.) voreinzustellen. Wissen betreffend die (Re-)Identifikation eines Benutzers kann verwendet werden, um Parameter wie in bereits gelaufenen Experimenten (eventuell vom Benutzer korrigiert) voreinzustellen.

Grundsätzlich wäre es denkbar, dass bei der Bestimmung der Konfluenzkarte und/oder der Dichtekarte Kontextinformation berücksichtigt wird. Z.B. könnte Vorwissen über die Größe und/oder Orientierung abhängig sein vom Vergrößerungsfaktor. Der erwartete Grauwert für bestimmte Strukturen könnte aus dem Vorwissen abgeleitet werden.

Solches und weiteres Vorwissen kann z.B. anhand von Kontextinformation (vgl. FIG. 8, Box 3506) bestimmt sein oder fest vorgegeben sein.

Neben einer Bestimmung der Konfluenzkarte und/oder der Dichtekarte kann auch eine Instanz-Segmentierung von Zellen erfolgen. Dies ist beispielsweise möglich, indem die gefilterte Vordergrund-Maske direkt zur Erzeugung einer Instanz-Segmentierung verwendet wird oder als Lerndaten für ein Machine-Learning-Modell zur Instanz-Segmentierungs-Modell verwendet wird.

Optional kann dann das Verfahren wiederholt werden, für weitere Mikroskopiebilder. Diese können z.B. Zellen unterschiedlicher Zellarten abbilden. Die Anpassung der Größe in Box 3510 kann dann jeweils unterschiedliche Skalierungsfaktoren verwenden, für Mikroskopiebilder, die Zellen unterschiedlicher Zellarten mit unterschiedlichen Größen abbilden. Derart kann erreicht werden, dass unterschiedliche Zellarten ausgewertet werden können. Durch das optionale Reskalieren kann der Auswertungsalgorithmus robust trainiert werden, auch gegenüber Veränderungen in den Bildgebungsparametern und für unterschiedlich große Zellen unterschiedlicher Zellarten.

Zellmittelpunkte unterschiedlicher Zellarten können in einer gemeinsamen Dichtekarte und/oder mehreren Dichtekarten gekennzeichnet werden. Nachfolgend werden Techniken im Detail beschrieben, die es ermöglichen, die Schätzung für die Anzahl der Zellen und/oder den Konfluenzgrad zu bestimmen, wobei unterschiedliche Zellarten berücksichtigt werden können. Das bedeutet, dass unterschiedliche Schätzungen für die verschiedenen Zellarten bestimmt werden können. Diese Techniken können kombiniert werden mit Nicht-Fluoreszenzkontrast-Bildgebungsmodalitäten, wie Phasenkontrast. Die Qualitätskontrolle von Zellkulturen kann dadurch verbessert werden, da zu jedem Kontrollzeitpunkt die "live cell viability" untersucht werden kann. Lebend-Tot-Assays bzw. Untersuchungen des Zellwachstums in Reaktion auf chemische Substanzen bzw. Compounds können vereinfacht durchgeführt werden. Ein weiterer Vorteil ist, dass man sich in der Zellkultur den Schritt der Zellzählung mit Zählkammer (Zellen in Suspension) sparen kann, da man dieselbe Information über das Zählen der adhärenten Zellen erhält. Die Anzahl der lebenden Zellen ist wichtig für die Ermittlung einer geeigneten Verdünnung bspw. beim Passagieren von Zellen.

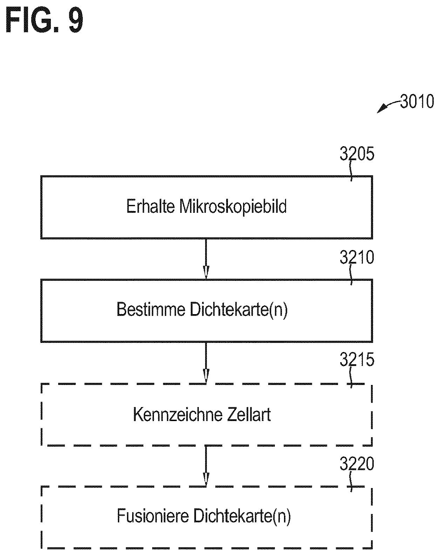

Details im Zusammenhang mit einer Mehrklassen (für mehrere Zellarten) Dichte-basierten Schätzung von Anzahl und/oder Konfluenzgrad sind in FIG. 9 beschrieben.

FIG. 9 ist ein Flussdiagramm eines beispielhaften Verfahrens. FIG. 9 illustriert Aspekte im Zusammenhang mit dem Bestimmen von Schätzungen der Anzahl und/oder des Konfluenzgrads von Zellen unterschiedlicher Zellarten. Beispielsweise kann das Verfahren aus FIG. 9 von einer Datenverarbeitungseinrichtung ausgeführt werden, die in Kommunikationsverbindung mit einem Mikroskop steht. Beispielsweise könnte das Verfahren aus FIG. 9 von der Vorrichtung 101 ausgeführt werden, insbesondere vom Prozessor 102 basierend auf Programmcode, welcher der Prozessor 102 aus dem Speicher 103 lädt und ausführt.

Das Verfahren der FIG. 9 dient der Inferenz (vergleiche FIG. 2: Box 3010) von Anzahl und/oder Konfluenz von Zellen. Dabei wird zwischen unterschiedlichen Zellarten diskriminiert. Das Verfahren der FIG. 9 operiert basierend auf ein oder mehreren Dichtekarten. Aspekte im Zusammenhang mit einer Dichtekarte 95 wurden bereits im Zusammenhang mit FIG. 4 beschrieben.

Solche Techniken beruhen auf der Erkenntnis, dass z.B. eine "Lebend - Tot" Unterscheidung wichtig für die korrekte Bestimmung der Zellzahl sein kann, die dann als Basis bspw. für Verdünnungsreihen dient. Das bedeutet, dass eine Auswertung selektiv z.B. für lebende Zellen durchgeführt werden kann. Eine Verarbeitung gemäß FIG. 9 kann bei regelmäßigen Kontrollen der Zellkultur mitlaufen, wodurch eine frühe Erkennung bei Veränderungen bzw. Unregelmäßigkeiten ermöglicht wird. Die Notwendigkeit des separaten Zellzählens mittels Zählkammer könnte hinfällig werden.

In Box 3205 wird ein Mikroskopiebild erhalten. Box 3205 entspricht Box 3105.

Das Erhalten des Mikroskopiebilds in Box 3205 kann unterschiedlich implementiert werden. Beispielsweise könnte in Box 3205 eine Bildgebungsvorrichtung zum Erfassen eines Mikroskopiebilds angesteuert werden. Das könnte aktiv von einem Benutzer ausgelöst werden, zum Beispiel durch Drücken eines Knopfes, etwa in einer GUI. Es könnte auch ein bereits existierendes, vorher gespeichertes Mikroskopiebild geladen werden. Der Benutzer könnte ein Mikroskopiebild manuell laden. Es könnte auch ein Mikroskopiebild automatisch erfasst werden. Der Erfassungszeitpunkt kann dabei vordefiniert sein, zum Beispiel in regelmäßigen zeitlichen Abständen während eines Experiments, oder adaptiv festgelegt werden. Zum Beispiel könnte in Abhängigkeit von einem Ereignis die Erfassung ausgelöst werden.

Das Mikroskopiebild kann einen Durchlicht-Kontrast ohne Fluoreszenzkodierung aufweisen. Beispielsweise könnte das Mikroskopiebild einen Phasenkontrast oder einen Phasengradientenkontrast (zum Beispiel digital erzeugt, durch Kombination von Bildern, die mit unterschiedlichen Beleuchtungsrichtungen erfasst wurden), einen Hellfeld-Kontrast, TIE, DIC, etc. aufweisen. Das Mikroskopiebild könnte aber auch einen Fluoreszenzkontrast aufweisen, zum Beispiel mit einer Färbung von Zellkernen.

Dann werden in Box 3210 basierend auf dem Mikroskopiebild aus Box 3205 ein oder mehrere Dichtekarten bestimmt. Optional können anschließend in einer Dichtekarte die verschiedenen Zellarten gekennzeichnet werden, in Box 3215. In anderen Beispielen wäre es möglich, dass mehrere Dichtekarten bestimmt werden, jeweils die verschiedenen Zellarten. Sofern mehrere Dichtekarten bestimmt werden, können diese optionalen Box 3220 fusioniert werden.

Allgemein formuliert kann also Box 3210 in Bezug auf mehrere Zellarten durchgeführt werden. Grundsätzlich wäre es denkbar, dass Box 3210 mehrfach iterativ ausgeführt wird, nämlich für unterschiedliche Zellarten, die aus einer Vielzahl von Zellarten basierend auf einer vorgegebenen Hierarchie zwischen den Zellarten ausgewählt werden. Zum Beispiel könnte Box 3210 erst für Zellen der Zellart "normal" und "abgelöst" durchgeführt werden, das heißt es könnte eine entsprechende Trennung von Dichtekarten usw. wie obenstehend beschrieben und nachfolgend näher erläutert, durchgeführt werden. Anschließend könnten solche Zellen, die zur Zellart "abgelöst" gehören, weiter unterschieden werden, zum Beispiel hinsichtlich Zellarten "tot" und "Mitose". Dann kann die Zellart "tot" weiter aufgesplittet werden in "Nekrose" und "Apotose". Derart können Ergebnisse zunehmend verfeinert werden, wobei aber viele Hierarchieebene grundsätzlich die gleichen Verarbeitungsschritte eingesetzt werden können.

Nachfolgend werden Details im Zusammenhang mit der Bestimmung von ein oder mehreren Dichtekarten im Zusammenhang mit FIG. 10, FIG. 11, FIG. 12 und FIG. 13 diskutiert. Das sind alles Varianten, die im Zusammenhang mit Boxen 3210, 3215 und 3220 ausgeführt werden können. Die technische Umsetzung einer Mehrklassen Dichte-basierten Zellmittelpunkt-Lokalisation kann auf verschiedene Weisen geschehen. Nachfolgend werden vier Szenarien erläutert. Gemeinsame Grundlage kann dabei eine Dichte-basierten Zellmittelpunkt-Lokalisation bilden. Hierbei wird durch ein Bild-zu-Bild-Modell (oder auch Bild-Regressions-Modell) für jeden im Eingabebild sichtbaren Zellmittelpunkt ein "Gauß-Glöckchen" im Ausgabebild erzeugt, wobei sich die Intensitäten jedes Glöckchens z.B. zu 1 summieren. Die zusätzliche Unterscheidung zwischen unterschiedlichen Zellarten kann in diesem Schritt bereits integriert werden oder aber nachträglich oder parallel stattfinden. Vier verschiedene Beispiele sind nachfolgend im Zusammenhang mit FIG. 10 bis FIG. 13 erläutert.

FIG. 10 illustriert schematisch die Datenverarbeitung zum Bestimmen einer Dichtekarte, die eine Wahrscheinlichkeit für die Anwesenheit oder Abwesenheit von Zellen unterschiedlicher Zellarten kodiert. Das Szenario der FIG. 10 entspricht einer Zellartagnostischen Dichte-basierten Lokalisation von Zellen mit anschließender Patch-Klassifikation der verschiedenen Zellarten.

Zunächst wird in Schritt 5005 ein Mikroskopiebild 93 erhalten. Schritt 5005 entspricht damit Box 3205 aus FIG. 9.

Dann wird in Schritt 5010 eine Dichtekarte 95 für das Mikroskopiebild 93 unter Verwendung eines ML Algorithmus bestimmt. Die Dichtekarte 95 wird dann als Ausgabe, in Schritt 5015, erhalten. Die Dichtekarte 95 kodiert die Wahrscheinlichkeit für die Anwesenheit oder Abwesenheit von Zellen unabhängig von der Zellart, das heißt Zellart-agnostisch.

Dann werden in Schritt 5020 die Positionen der Zellen in der Dichtekarte 95 ermittelt, zum Beispiel durch eine Schwellenwert-Analyse oder eine Non-Maximum-Suppression-Auswertung. Derart kann vermieden werden, dass in einem Umfeld um eine Zelle eine weitere Zelle lokalisiert ist.

In Schritt 5020 können dann auch Bildausschnitte basierend auf den ermittelten Positionen der Zellen bestimmt werden, sogenannte Patches. Für jeden dieser Bildausschnitte kann die Zelle klassifiziert werden, basierend auf dem Mikroskopiebild. Derart kann die jeweilige Zellart bestimmt werden. Die derart bestimmten Zellarten werden in Schritt 5025 in der Dichtekarte 95 gekennzeichnet. Basierend auf der Dichtekarte 95 und diesem Kennzeichnen kann für jede Zellart eine Schätzung der Anzahl und/oder des Konfluenzgrads durchgeführt werden.

Für die Klassifikationen Schritt 5020 kann ein ML Algorithmus verwendet werden. Dieser kann geeignet trainiert werden, basierend auf den Bildausschnitten und manuelle Annotierung.

FIG. 11 illustriert schematisch die Datenverarbeitung zum Bestimmen zweier Dichtekarten 95-1, 95-2, die jeweils die Wahrscheinlichkeit für die Anwesenheit oder Abwesenheit von Zellen einer entsprechenden Zellart kodieren. Dass Szenario der FIG. 11 entspricht einer Mehrklassen Dichte-basierten Lokalisation von Zellen mit separierten Kanälen für die verschiedenen Zellarten.

Zunächst wird in Schritt 5105 von Mikroskopiebild 93 erhalten. Schritt 5105 entspricht damit Schritt 5005 aus FIG. 10 bzw. Box 3205 aus FIG. 9.

Dann werden in Schritt 5110 mehrere Dichtekarten 95-1, 95-2 unter Verwendung eines ML Algorithmus bestimmt. Basierend auf diesen mehreren Dichtekarten 95-1, 95-2, die in Schritt 5115 als Ausgabe erhalten werden, kann dann eine Schätzung der Anzahl und/oder des Konfluenzgrads der jeweiligen Zellen bestimmt werden.

Die beiden Dichtekarten 95-1, 95-2 könnten miteinander verglichen werden. Insbesondere könnte ermittelt werden, ob an bestimmten Orten in beiden Dichtekarten 95-1, 95-2 ein Zellmittelpunkte lokalisiert ist. Dies würde auf einen Verarbeitungsfehler hindeuten. Derart kann also ein Plausibilisiert in der beiden Dichtekarten 95-1, 95-2 durch einen ortsaufgelösten Vergleich ermöglicht werden.

Optional wäre es denkbar, dass die beiden Dichtekarten 95-1, 95-2 fusioniert werden, um derart eine aggregierten Dichtekarte zu erhalten (vgl. auch FIG. 12 und FIG. 13), welche die An- oder Abwesenheit von Zellen unterschiedlicher Zellarten durch unterschiedliche Wertebereiche kodiert. Es könnten also die Werte der verschiedenen einzelnen Dichtekarte 95-1, 95-2 auf unterschiedliche Wertebereiche der aggregierten Dichtekarte abgebildet werden. Dann kann die Schätzung der Anzahl und/oder des Konfluenzgrads der Zellen basierend auf der aggregierten Dichtekarte bestimmt werden. Dies kann den Vorteil einer kompakten Datenverarbeitung mit sich bringen.

In dem Szenario der FIG. 11 wird ein einzelner maschinengelernter Algorithmus in Schritt 5110 zum Bestimmen der Dichtekarten 95-1, 95-2 verwendet. Dieser ML Algorithmus umfasst mehrere Verarbeitungspfade, die den verschiedenen Zellarten zugeordnet sind.

Als allgemeine Regel gibt es unterschiedliche Möglichkeiten, unterschiedlichen Verarbeitungspfade zu implementieren. Beispielsweise wäre es in einer Variante möglich, dass die mehreren Verarbeitungspfade gemeinsame Kodier-Zweige (die eine Kontraktion von Merkmalsvektoren im Ortsraum hin zu einem Flaschenhals mit latenter Repräsentation des Eingangsbilds bewirken) und Dekodier-Zweige aufweisen (die eine Expansion von Merkmalsvektoren im Ortsraum weg vom Flaschenhals bewirken), und lediglich unterschiedliche Ausgabekanäle. Das heißt, dass die Verarbeitung lediglich in der letzten Schicht eines KNNs unterschiedlich sein kann. Es wäre aber auch möglich, dass die mehreren Verarbeitungspfade einen gemeinsamen Kodier-Zweig und getrennte Dekodier-Zweige - die dann mehrere Schichten umfassen können - aufweist. Beispielsweise könnte es für jeden Verarbeitungszweig einen unterschiedlichen Kopf geben. In manchen Beispielen wäre es sogar denkbar, dass für die verschiedenen Dichtekarten 95-1, 95-2 gänzlich getrennte ML Algorithmen verwendet werden (in FIG. 11 ist das nicht dargestellt).

Durch die Erzeugung separater Dichtekarten 95-1, 95-2 für die verschiedenen Zellklassen kann eine gegenseitige Beeinflussung - zum Beispiel durch Überlagerung unterschiedlicher Werte, die in Wertebereichen angeordnet sind, die mit anderen Zellarten assoziiert sind - vermieden werden.

FIG. 12 illustriert schematisch die Datenverarbeitung zum Bestimmen einer Dichtekarte 95, die die Wahrscheinlichkeit für die Anwesenheit oder Abwesenheit von Zellen einer entsprechenden Zellart kodiert. Das Szenario der FIG. 12 entspricht einer Dichte-basierten Lokalisation von Zellen mehrerer Zellarten mit einer Aufteilung des Wertebereichs der Dichtekarte 95 gemäß den verschiedenen Zellarten.

Zunächst wird in Schritt 5205 ein Mikroskopiebild 93 erhalten. Schritt 5205 entspricht damit den Schritten 5105 sowie 5005 aus FIG. 11 und FIG. 10, bzw. Box 3205 aus FIG. 9.

Dann wird mittels eines ML Algorithmus in Schritt 5210 eine aggregierte Dichtekarte 95 - die in Schritt 5215 erhalten wird - bestimmt.

Die aggregierte Dichtekarte kodiert für jede Zellart (in FIG. 12 sind zwei Zellarten dargestellt) eine Wahrscheinlichkeit für die Anwesenheit oder Abwesenheit von entsprechenden Zellen durch einen entsprechenden Wertebereich. Im Beispiel der FIG. 12 sind die beiden Wertebereiche mit weißem und schwarzem Kontrast in der aggregierten Dichtekarte 95 aus Schritt 5215 dargestellt.

Basierend auf dieser aggregierten Dichtekarte kann ein für jede der mehreren Zellarten eine Schätzung der Anzahl und/oder des Konfluenzgrads der jeweiligen Zellen bestimmt werden.

Zum Beispiel könnten lebende Zellen mit einer Dichteverteilung im Wertebereich [0,1] kodiert werden, und/oder Zellen invers dazu mit einer Dichteverteilung Wertebereich [-1,0]. Dies würde bei einem Wert von 0 bedeuten, dass ich dort keine Zelle befindet. Diese Wertebereich sind lediglich Beispiele. Beispielsweise könnten auch Wertebereiche für eine erste Zellart von [0,0.5] Unfälle zweite Zellart von [0.5,1] verwendet werden.

Eine solche Variante weist den Vorteil auf, dass die Nachverarbeitung besonders kompakter erfolgen kann, weil lediglich eine einzelne Dichtekarte 95 verwendet wird.

FIG. 13 illustriert schematisch die Datenverarbeitung zum Bestimmen einer Dichtekarte 95, die die Wahrscheinlichkeit für die Anwesenheit oder die Abwesenheit von Zellen mehrerer Zellarten durch die Verwendung mehrerer Wertebereiche kodiert. Das Szenario der FIG. 13 entspricht also einer Dichte-basierten Lokalisation von Zellen mehrerer Zellarten. Dabei wird die Modellierung der Zellart und der Zellanwesenheit getrennt durchgeführt.

Zunächst wird in Schritt 5305 ein Mikroskopiebild 93 erhalten. Schritt 5305 entspricht damit jeweils den Schritten 5005, 5105 und 5205 aus FIGs. 10, 11 und 12, bzw. Box 3205 aus FIG. 9.

Dann werden in den Schritten 5310, 5315 und 5320 einerseits eine Dichtekarte 95 bestimmt, die die Wahrscheinlichkeit für die Anwesenheit oder Abwesenheit von Zellen unabhängig von der Zellart kodiert (d.h. es wird eine "Zellartigkeit" ausgegeben, ohne die spezifische Zellart aufzulösen); und andererseits werden die Zellarten für die Zellen basierend auf dem Mikroskopiebild 93 bestimmt. Dazu werden zwei unterschiedliche ML Verarbeitungspfade verwendet, die sich zumindest teilweise überlappen können. Im Beispiel der FIG. 13 wird dann eine Zellart-Karte 99 erhalten, welche an den Zellpositionen jeweils die jeweilige Zellart kodiert.

Die Zellart-Karte 99 könnte optional im Ortsraum geglättet werden.

Es ist dann möglich, die Zellarten in der Dichtekarte zu kennzeichnen, wodurch eine aggregierte Dichtekarte 95 erhalten wird, welche sowohl die Positionen, wie auch die Zellarten der Zellen kodiert.

Basierend auf dieser aggregierten Dichtekarte 95 in Schritt 5021 kann eine Schätzung der Anzahl und/oder des Konfluenzgrads bestimmt werden, entsprechend Schritt 5215 aus FIG. 12.

Aus FIG. 13 ist ersichtlich, dass die Ausgabe des ML Algorithmus in Schritt 5315 die Dichtekarte 95 in Schritt 5325 bereitstellt, die Werte für die Dichtekarte bereitstellt, die für die mehreren Zellarten im selben Wertebereich liegen (in FIG. 13 sind alle Zellen mit weißem Kontrast kodiert). zum Beispiel könnte ein entsprechender ML Verarbeitungspfad eine Schicht aufweisen, die unterschiedliche Aktivierungen des ML Verarbeitungspfads für die Zellen der mehreren Zelltypen auf diesen selben Wertebereich abbildet. Es wäre möglich, eine ReLU/Sigmoid-Funktion zu verwenden, die den Wertebereich begrenzt. Dies hat zur Folge, dass keine negativ ausschlagenden Dichteverteilungen erzeugt werden können. Der Verarbeitungspfad ist also gezwungen positive Dichteverteilungen unabhängig von der jeweiligen Zellart vorherzusagen.

Dahingegen stellt die Ausgabe des ML Verarbeitungspfads in Schritt 5320 für die mehreren Zelltypen unterschiedliche diskrete Werte bereit (in FIG. 13 sind diese diskreten Werte jeweils mit weißer Farbe und schwarzer Farbe kodiert). Diese unterschiedlichen diskreten Werte können als Multiplikatoren dienen, wobei die Zelltypen in der Dichtekarte 95 durch Multiplikation der Dichtekarte mit den Multiplikatoren gekennzeichnet werden. Es wären aber auch andere Arten der Fusion denkbar. Also soll die Ausgabe des Verarbeitungspfads für die Zellart-Karte 99 keine kontinuierlichen Werte (also z.B. Dichteverteilungen) vorhersagen können - sondern diskrete Werte, die z.B. als Multiplikatoren dienen können. Die Multiplikatoren können unterschiedliche Vorzeichen aber gleiche Magnitude aufweisen, z.B. +1, -1. Dies kann dadurch erreicht werden, dass eine entsprechende Funktion nach der oder als Ausgabeschicht angebracht wird. Dies kann eine tanh-Funktion sein oder auch eine Heaviside-Funktion mit einem Wertebereich zwischen [-1,1]. Ziel ist es, nur das "Vorzeichen" (also die Zugehörigkeit zu einer Klasse, die mit den Zellarten korreliert) zu bestimmen, nicht aber die Dichteverteilung zu modellieren. Im Falle einer Heaviside-Funktion kann während des Trainings des ML Verarbeitungspfads ein Rauschen auf die Ausgabewerte gelegt werden.

In FIG. 13 ist ein Szenario gezeigt, indem zwei Zellarten unterschieden werden - z.B. lebende von toten Zellen. Falls es mehrere Zellarten gibt, dann kann die Klassifikation auch hierarchisch erfolgen. Beispielsweise erste Hierarchieebene "normal" vs "abgelöst" und dann "abgelöst" aufsplitten in "tot" vs "Mitose" und dann "tot" aufsplitten in "Nekrose" vs "Apoptose". Mitose kann u.U. auch noch in einzelne Phasen aufgetrennt werden.

Die gewünschten Ausgaben im jeweiligen Verarbeitungspfads in Schritten 5310, 5315, 5320 können durch "Deep Supervision" während des Trainings erzwungen werden. Dabei wird eine Verlustfunktion in die gewünschte Zwischenausgabe eingebracht. Konkret für die Zellartigkeit - d.h. den Verarbeitungspfad in Schritt 5315 - bedeutet dies, dass Dichtekarten als Vorwissen erzeugt werden (in Box 3515 aus FIG. 8), welche nur positive Dichteverteilungen (also unabhängig von der Klasse) zeigen. Der Verlust zwischen dieser Dichtekarte und der Ausgabe des Verarbeitungspfads kann wie in FIG. 10 berechnet werden und als zusätzlicher Faktor in die Optimierung einfließen. Somit wird im Training explizit erzwungen, dass der Verarbeitungspfad klassenunabhängig einen Ausschlag für jeden Zellmittelpunkt erzeugt. Implizit bedeutet dies für den anderen Verarbeitungspfad in Schritt 5325, dass nur noch das Vorzeichen für ihn "übrigbleibt".

In FIG. 13 ist ein Beispiel illustriert, in dem die beiden Verarbeitungspfade teilweise getrennt sind. Grundsätzlich können zwei komplett separate ML Algorithmen verwendet werden. Es wäre aber auch möglich, dass ein ML Algorithmus verwendet wird, der teilweise getrennte Verarbeitungspfade hat, zum Beispiel getrennte Ausgangsschichten und möglicherweise Dekodier-Abschnitte. Es könnte auch ein Modell mit dem Vorzeichen als Attention- Mechanismus verwendet werden (das heißt nur eine Ausgabeschicht und Trennung implizit durch das Design des ML Algorithmus).

Mittels der Datenverarbeitung gemäß FIG. 13 kann eine besonders kompakte Implementierung der Verarbeitungspfade ermöglicht werden. Trotzdem kann eine eindeutige Vorhersage erzielt werden, Überlagerungen wie beispielsweise in FIG. 12 können vermieden werden. Die Dichtekarte 95 ist agnostisch betreffend die Zellart und kann somit für unterschiedliche Zellarten gemeinsam trainiert werden. Es wird kein spezieller Verarbeitungspfad für die Lokalisation der Zellen benötigt. Dadurch kann die Komplexität der ein oder mehreren ML Algorithmen reduziert werden. Die Laufzeit kann reduziert werden und die Generalisierbarkeit kann gesteigert werden.

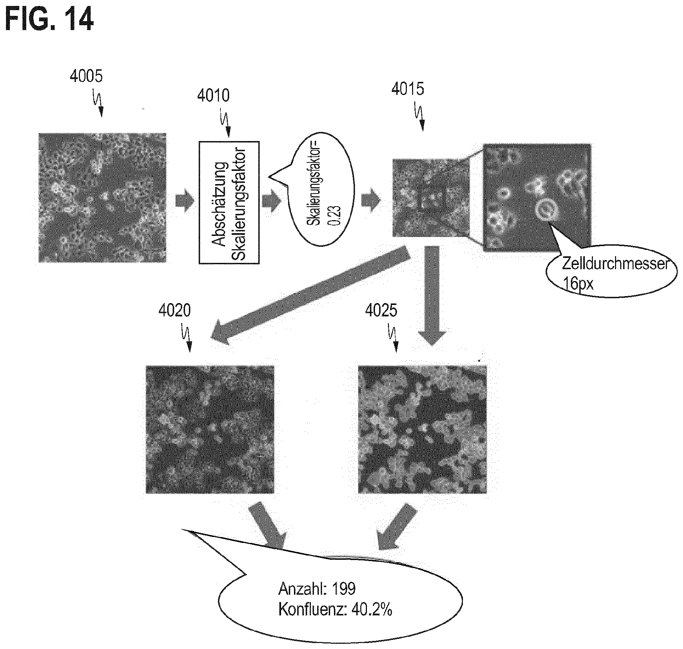

FIG. 14 illustriert schematisch die Datenverarbeitung zur Bestimmung der Schätzung einer Anzahl der Zellen und der Schätzung eines Konfluenzgrads basierend auf einem Mikroskopiebild. FIG. 14 kann zum Beispiel das Verfahren der FIG. 7 implementieren.

Zunächst wird in Schritt 4005 ein Mikroskopiebild erhalten. Dieses könnte zum Beispiel einen Phasenkontrast aufweisen. In FIG. 14 sind Zellen gekennzeichnet, wobei die Zellen einen nicht vorher festgelegten durchschnittlichen Durchmesser aufweisen, der zum Beispiel von der Wahl des Objektivs abhängt.

In Schritt 4010 wird dann ein Skalierungsfaktor bestimmt, der zum Beispiel im dargestellten Beispiel 0,23 wäre. Das bedeutet, dass ein reskaliertes Mikroskopiebild durch Anpassen der Größe des ursprünglichen Mikroskopiebild (Reduktion auf in etwa ein Viertel der Ursprungsgröße) bestimmt werden kann, welches in Schritt 4015 erhalten wird. Entsprechende Techniken wurden voranstehend im Zusammenhang mit Box 3110 beschrieben. Z.B. kann ein ML Algorithmus verwendet werden oder es könnten die durchschnittlichen Zellgrößen oder Zellstrukturgrößen - je nachdem, worauf normiert wird - über Heuristiken gemessen werden.

In Schritt 4020 wird anschließend eine Schätzung der Anzahl der Zellen bestimmt. Dabei ist in FIG. 14 jeweils ein Zellmittelpunkten im Mikroskopiebild (welches wieder auf die ursprüngliche Größe zurück skaliert wird) eingezeichnet. Die Zellmittelpunkte können zum Beispiel aus einer Dichtekarte (vergleiche Dichtekarte 96 in FIG. 4) ermittelt werden, wobei die Dichtekarte zum Bestimmen der Schätzung der Anzahl der Zellen verwendet wird. Die Dichtekarte kann zum Beispiel mit einem geeigneten künstlichen neuronalen Netzwerk basierend auf dem reskalierten Mikroskopiebild bestimmt werden. Sind mehrere Zellarten abgebildet, können Techniken gemäß FIG. 9 bis FIG. 13 verwendet werden.

In Schritt 4025 wird die Schätzung des Konfluenzgrads bestimmt. Dabei ist in FIG. 14 dargestellt, wie Konfluenzregionen auf das (wieder auf seine ursprüngliche Größe zurück skalierte) Mikroskopiebild überlagert werden können. Die Schätzung des Konfluenzgrads kann unter Verwendung einer Konfluenzkarte bestimmt werden (vergleiche FIG. 6, wo die Konfluenzkarte 96 diskutiert wurde). Der Konfluenzgrad könnte auch unter Verwendung einer Dichtekarte bestimmt werden

In Schritt 4030 können die Schätzung für die Anzahl der Zellen und die Schätzung für den Konfluenzgrads ausgegeben werden, an einen Benutzer.

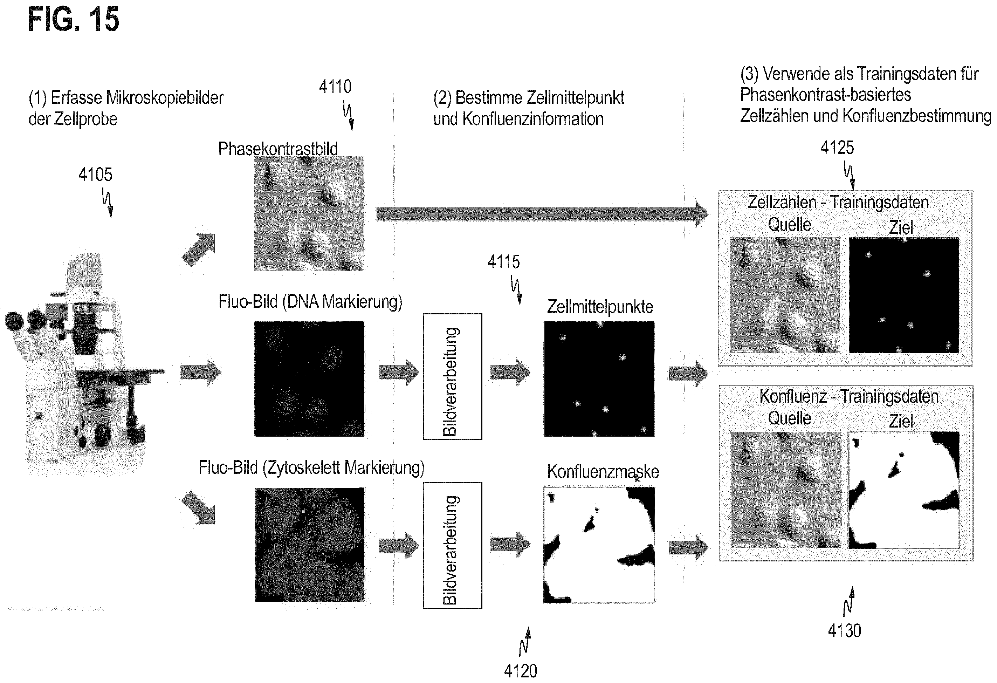

FIG. 15 illustriert schematisch die Datenverarbeitung zum Training eines maschinengelernten Algorithmus, der dazu verwendet werden kann, den Konfluenzgrad und/oder einer Anzahl von Zellen zu schätzen. Zum Beispiel können ML Auswertungsalgorithmen trainiert werden, die in FIG. 14 in Schritt 4020 und Schritt 4025 verwendet werden können. Die Datenverarbeitung gemäß FIG. 15 kann zum Beispiel das Verfahren der FIG. 8 implementieren.

Zunächst erfolgt in Schritt 4105 die Erfassung eines Mikroskopiebild mit mehreren Kanälen, welches in Schritt 4110 erhalten wird. Das entspricht Box 3505 aus FIG. 8.

Beispielsweise wird im dargestellten Szenario ein Mikroskopiebild mit drei Kanälen erhalten, nämlich einem Phasenkontrast (ganz oben), einem Fluoreszenzkontrast, der die DNA markiert (in der Mitte), und einem weiteren Fluoreszenzkontrast, der das Zellskelett markiert (ganz unten). Die Fluoreszenzkontraste sind sog. Referenz-Kanäle, weil diese typischerweise nur während des Trainings verfügbar sind und zum Bestimmen von Vorwissen verwendet werden. Als allgemeine Regel können sich solche Fluoreszenzkontraste für die Bestimmung einer Konfluenzkarte eigenen, welche flächige Strukturen von Zellen hervorheben. Beispiele wären zum Beispiel Fluoreszenzkontraste, welche das Zellskelett oder eine Zellmembran markieren.

Allgemein könnten für einen Trainings-Kanal ein Phasenkontrast oder ein Weitfeld-Kontrast oder ein Nicht-Fluoreszenzkontrast verwendet werden.

Dann wird in Schritt 4115 Vorwissen in Form einer Dichtekarte bestimmt. Dazu könnte zum Beispiel ein weiterer ML Algorithmus eingesetzt werden. Es könnte auch eine Schwellenwertoperation, beispielsweise gefolgt von ein oder mehreren morphologischen Operationen verwendet werden. In FIG. 15 ist dargestellt, dass das Vorwissen in Form der Dichtekarte basierend auf dem Fluoreszenzkontrast, der die DNA bzw. den Zellkern markiert, bestimmt wird, also auf einem entsprechenden Referenz-Kanal des Mikroskopiebild basiert.

Außerdem wird in Schritt 4120 Vorwissen in Form einer Konfluenzkarte bestimmt. Dazu kann wiederum ein ML Algorithmus eingesetzt werden. Es könnte auch eine Schwellenwert-Operation verwendet werden, beispielsweise gefolgt von ein oder mehreren morphologischen Operationen. In FIG. 15 ist dargestellt, dass das Vorwissen in Form der Konfluenzkarte basierend auf dem Fluoreszenzkontrast, der das Zellskelett markiert, bestimmt wird, also basierend auf einem entsprechenden Referenz-Kanal des Mikroskopiebild basiert.

Dadurch werden in Schritt 4125 und Schritt 4130 jeweils Trainingsdaten erhalten. Die in Schritt 4125 erhaltenen Trainingsdaten umfassen den Phasenkontrast-Kanal des Mikroskopiebilds aus Schritt 4110 als Trainings-Mikroskopiebild und die Dichtekarte aus Schritt 4115 als Vorwissen. Die in Schritt 4130 erhaltenen Trainingsdaten umfassen wiederum den Phasenkontrast-Kanal des Mikroskopiebild aus Schritt 4110 als Trainings-Mikroskopiebild und die Dichtekarte aus Schritt 4120 als Vorwissen.

Dann können jeweilige ML Algorithmen trainiert werden, so dass diese eine Dichtekarte bzw. eine Konfluenzkarte vorhersagen. Es könnte vorher eine Anpassung der Größe erfolgen, sodass eine bestimmte Zellstruktur eine Größe gemäß einem vorgegebenen Referenzwert hat.

Das Training von ML Verarbeitungspfaden und Algorithmen zur Bestimmung der Dichtekarte und der Konfluenzkarte kann gekoppelt erfolgen. Es kann eine Verlustfunktion berücksichtigt werden, die konsistente Ergebnisse fördert (z.B. Zellkerne in Konfluenzregionen und geringe Varianz der Zelldichte innerhalb von Konfluenzregionen).

## Patentansprüche

1. Computer-implementiertes Verfahren, das umfasst:
- Erhalten (3105) eines lichtmikroskopischen Bilds (91, 92), das eine Vielzahl von Zellen abbildet,
- Anpassen (3110) einer Größe des lichtmikroskopischen Bilds (91, 92), sodass eine Größe einer vorgegebene Zellstruktur der Vielzahl von Zellen einem vorgegebenen Referenzwert entspricht,
- nach dem Anpassen (3110) der Größe: Bestimmen (3115, 3120) einer Schätzung der Anzahl und/oder eines Konfluenzgrads der Zellen basierend auf dem lichtmikroskopischen Bild (91, 92), und
- Verwenden eines ersten maschinengelernten Algorithmus, der mittels einer Bild-zu-Bild Transformation basierend auf dem lichtmikroskopischen Bild (91, 92) die Größe des lichtmikroskopischen Bilds (91, 92) anpasst.

2. Computer-implementiertes Verfahren nach Anspruch 1, das weiterhin umfasst:
- Durchführen einer Plausibilisierung eines Skalierungsfaktors, der mit dem Anpassen der Größe des lichtmikroskopischen Bilds assoziiert ist.

3. Computer-implementiertes Verfahren nach Anspruch 2,
wobei die Plausibilisierung in Abhängigkeit von einem Konfidenzniveau des Skalierungsfaktors durchgeführt wird.

4. Computer-implementiertes Verfahren, das umfasst:
- Erhalten (3105) eines lichtmikroskopischen Bilds (91, 92), das eine Vielzahl von Zellen abbildet,
- Anpassen (3110) einer Größe des lichtmikroskopischen Bilds (91, 92), sodass eine Größe einer vorgegebene Zellstruktur der Vielzahl von Zellen einem vorgegebenen Referenzwert entspricht,
- nach dem Anpassen (3110) der Größe: Bestimmen (3115, 3120) einer Schätzung der Anzahl und/oder eines Konfluenzgrads der Zellen basierend auf dem lichtmikroskopischen Bild (91, 92), und
- Verwenden eines ersten maschinengelernten Algorithmus, der mittels einer Bild-zu-Skalar Transformation basierend auf dem lichtmikroskopischen Bild (91, 92) einen Skalierungsfaktor für das Anpassen der Größe bestimmt.

5. Computer-implementiertes Verfahren nach Anspruch 4,
wobei der erste maschinengelernte Algorithmus mehrere Bildausschnitte des lichtmikroskopischen Bilds erhält und wobei der Skalierungsfaktor basierend auf einer Mittelung in Bezug auf die mehreren Bildausschnitte für das lichtmikroskopische Bild bestimmt wird.

6. Computer-implementiertes Verfahren nach Anspruch 4 oder 5, das weiterhin umfasst:
- Durchführen einer Plausibilisierung des Skalierungsfaktors, der mit dem Anpassen der Größe des lichtmikroskopischen Bilds assoziiert ist.

7. Computer-implementiertes Verfahren nach Anspruch 6,
wobei die Plausibilisierung in Abhängigkeit von einem Konfidenzniveau des Skalierungsfaktors durchgeführt wird.

8. Computer-implementiertes Verfahren nach einem der voranstehenden Ansprüche,
wobei das Anpassen der Größe des lichtmikroskopischen Bilds in mehreren Iterationen durchgeführt wird,
wobei das Anpassen der Größe des lichtmikroskopischen Bilds in den mehreren Iterationen so lange erfolgt, bis eine Plausibilisierung eines Skalierungsfaktors, der mit dem Anpassen der Größe des lichtmikroskopischen Bilds assoziiert ist, erfolgreich ist.

9. Computer-implementiertes Verfahren nach einem der voranstehenden Ansprüche,
wobei die Vielzahl von Zellen mehrere Zellarten aufweist, die unterschiedliche Größen aufweisen,
wobei das Anpassen der Größe des lichtmikroskopischen Bilds (91, 92) weiterhin umfasst:
- für jede Zellart: Bestimmen einer zugehörigen Instanz des lichtmikroskopischen Bilds (91, 92) und Anpassen der Größe der jeweiligen Instanz des lichtmikroskopischen Bilds (91, 92), sodass die Größe der vorgegebenen Zellstruktur für die jeweilige Zellart dem vorgegebenen Referenzwert entspricht, wodurch eine jeweilige reskalierte Instanz des lichtmikroskopischen Bilds (91, 92) erhalten wird,
wobei das Bestimmen der Schätzung der Anzahl und/oder des Konfluenzgrads der Zellen basierend auf den reskalierten Instanzen des lichtmikroskopischen Bilds durchgeführt wird.

10. Computer-implementiertes Verfahren nach einem der voranstehenden Ansprüche,
wobei das Anpassen der Größe des lichtmikroskopischen Bilds und das Bestimmen der Schätzung der Anzahl und/oder des Konfluenzgrads der Zellen durch einen gemeinsamen Algorithmus implementiert werden.

11. Computer-implementiertes Verfahren nach einem der voranstehenden Ansprüche,
- Ausgeben, in einer graphischen Benutzerschnittstelle, des lichtmikroskopischen Bilds in seiner ursprünglichen Größe vor dem Anpassen der Größe sowie Ausgeben der Schätzung als Überlagerung des lichtmikroskopischen Bilds.

12. Vorrichtung, umfassend einen Prozessor, der eingerichtet ist, um folgende Schritte auszuführen:
- Erhalten (3105) eines lichtmikroskopischen Bilds (91, 92), das eine Vielzahl von Zellen abbildet,
- Anpassen (3110) einer Größe des lichtmikroskopischen Bilds (91, 92), sodass eine Größe einer vorgegebene Zellstruktur der Vielzahl von Zellen einem vorgegebenen Referenzwert entspricht,
- Bestimmen (3115, 3120) einer Schätzung der Anzahl und/oder eines Konfluenzgrads der Zellen basierend auf dem lichtmikroskopischen Bild (91, 92), und
- Verwenden eines ersten maschinengelernten Algorithmus, der mittels einer Bild-zu-Bild Transformation basierend auf dem lichtmikroskopischen Bild (91, 92) die Größe des lichtmikroskopischen Bilds (91, 92) anpasst.

13. Vorrichtung, umfassend einen Prozessor, der eingerichtet ist, um folgende Schritte auszuführen:
- Erhalten (3105) eines lichtmikroskopischen Bilds (91, 92), das eine Vielzahl von Zellen abbildet,
- Anpassen (3110) einer Größe des lichtmikroskopischen Bilds (91, 92), sodass eine Größe einer vorgegebene Zellstruktur der Vielzahl von Zellen einem vorgegebenen Referenzwert entspricht,
- Bestimmen (3115, 3120) einer Schätzung der Anzahl und/oder eines Konfluenzgrads der Zellen basierend auf dem lichtmikroskopischen Bild (91, 92), und
- Verwenden eines ersten maschinengelernten Algorithmus, der mittels einer Bild-zu-Skalar Transformation basierend auf dem lichtmikroskopischen Bild (91, 92) einen Skalierungsfaktor für das Anpassen der Größe bestimmt.

14. Computerprogramm, das Programmcode umfasst, der von einem Prozessor geladen und aufgeführt werden kann, wobei das Ausführen des Programmcodes bewirkt, dass der Prozessor ein Verfahren nach einem der Ansprüche 1 bis 11 ausführt.

## Claims

1. Computer-implemented method, comprising:
- acquiring (3105) a light-microscope image (91, 92) which images a multiplicity of cells,
- adapting (3110) a size of the light-microscope image (91, 92), such that a size of a predefined cell structure of the multiplicity of cells corresponds to a predefined reference value,
- after adapting (3110) the size: determining (3115, 3120) an estimation of the number and/or a degree of confluence of the cells on the basis of the light-microscope image (91, 92), and
- using a first machine-learned algorithm, which adapts the size of the light-microscope image (91, 92) by means of an image-to-image transformation on the basis of the light-microscope image (91, 92).

2. Computer-implemented method according to Claim 1, furthermore comprising:
- carrying out a plausibilization of a scaling factor associated with adapting the size of the light-microscope image.

3. Computer-implemented method according to Claim 2,
wherein the plausibilization is carried out depending on a confidence level of the scaling factor.

4. Computer-implemented method, comprising:
- acquiring (3105) a light-microscope image (91, 92) which images a multiplicity of cells,
- adapting (3110) a size of the light-microscope image (91, 92), such that a size of a predefined cell structure of the multiplicity of cells corresponds to a predefined reference value,
- after adapting (3110) the size: determining (3115, 3120) an estimation of the number and/or a degree of confluence of the cells on the basis of the light-microscope image (91, 92), and
- using a first machine-learned algorithm, which determines a scaling factor for adapting the size by means of an image-to-scalar transformation on the basis of the light-microscope image (91, 92).

5. Computer-implemented method according to Claim 4,
wherein the first machine-learned algorithm acquires a plurality of image excerpts of the light-microscope image and wherein the scaling factor is determined on the basis of an averaging in relation to the plurality of image excerpts for the light-microscope image.

6. Computer-implemented method according to Claim 4 or 5, furthermore comprising:
- carrying out a plausibilization of the scaling factor associated with adapting the size of the light-microscope image.

7. Computer-implemented method according to Claim 6,
wherein the plausibilization is carried out depending on a confidence level of the scaling factor.

8. Computer-implemented method according to any of the preceding claims,
wherein adapting the size of the light-microscope image is carried out in a plurality of iterations,
wherein adapting the size of the light-microscope image is effected in the plurality of iterations until a plausibilization of a scaling factor associated with adapting the size of the light-microscope image is successful.

9. Computer-implemented method according to any of the preceding claims,
wherein the multiplicity of cells has a plurality of cell types having different sizes,
wherein adapting the size of the light-microscope image (91, 92) furthermore comprises:
- for each cell type: determining an associated instance of the light-microscope image (91, 92) and adapting the size of the respective instance of the light-microscope image (91, 92), such that the size of the predefined cell structure for the respective cell type corresponds to the predefined reference value, whereby a respective rescaled instance of the light-microscope image (91, 92) is acquired,
wherein determining the estimation of the number and/or the degree of confluence of the cells is carried out on the basis of the rescaled instances of the light-microscope image.

10. Computer-implemented method according to any of the preceding claims,
wherein adapting the size of the light-microscope image and determining the estimation of the number and/or of the degree of confluence of the cells are implemented by a common algorithm.

11. Computer-implemented method according to any of the preceding claims,
- outputting, in a graphical user interface, the light-microscope image in its original size before adapting the size and outputting the estimation as a superimposition of the light-microscope image.

12. Device comprising a processor configured to carry out the following steps:
- acquiring (3105) a light-microscope image (91, 92) which images a multiplicity of cells,
- adapting (3110) a size of the light-microscope image (91, 92), such that a size of a predefined cell structure of the multiplicity of cells corresponds to a predefined reference value,
- determining (3115, 3120) an estimation of the number and/or a degree of confluence of the cells on the basis of the light-microscope image (91, 92), and
- using a first machine-learned algorithm, which adapts the size of the light-microscope image (91, 92) by means of an image-to-image transformation on the basis of the light-microscope image (91, 92).

13. Device comprising a processor configured to carry out the following steps:
- acquiring (3105) a light-microscope image (91, 92) which images a multiplicity of cells,
- adapting (3110) a size of the light-microscope image (91, 92), such that a size of a predefined cell structure of the multiplicity of cells corresponds to a predefined reference value,
- determining (3115, 3120) an estimation of the number and/or a degree of confluence of the cells on the basis of the light-microscope image (91, 92), and
- using a first machine-learned algorithm, which determines a scaling factor for adapting the size by means of an image-to-scalar transformation on the basis of the light-microscope image (91, 92).

14. Computer program comprising program code which can be loaded and executed by a processor, wherein executing the program code causes the processor to carry out a method according to any of Claims 1 to 11.

## Revendications

1. Procédé mis en œuvre par ordinateur, qui comprend les étapes consistant à :
- obtenir (3105) une image de microscopie optique (91, 92) représentant une pluralité de cellules,
- ajuster (3110) une taille de l'image de microscopie optique (91, 92) de sorte qu'une taille d'une structure cellulaire prédéterminée de la pluralité de cellules corresponde à une valeur de référence prédéterminée,
- après l'ajustement (3110) de la taille : déterminer (3115, 3120) une estimation du nombre et/ou du degré de confluence des cellules sur la base de l'image de microscopie optique (91, 92), et
- utiliser un premier algorithme d'apprentissage automatique qui ajuste, au moyen d'une transformation d'image à image sur la base de l'image de microscopie optique (91, 92), la taille de l'image de microscopie optique (91, 92).

2. Procédé mis en œuvre par ordinateur selon la revendication 1, comprenant en outre l'étape consistant à :
- effectuer un contrôle de plausibilité d'un facteur de mise à l'échelle associé à l'ajustement de la taille de l'image de microscopie optique.

3. Procédé mis en œuvre par ordinateur selon la revendication 2,
dans lequel le contrôle de plausibilité est effectué en fonction d'un niveau de confiance du facteur de mise à l'échelle.

4. Procédé mis en œuvre par ordinateur, qui comprend les étapes consistant à :
- obtenir (3105) une image de microscopie optique (91, 92) représentant une pluralité de cellules,
- ajuster (3110) une taille de l'image de microscopie optique (91, 92) de sorte qu'une taille d'une structure cellulaire prédéterminée de la pluralité de cellules corresponde à une valeur de référence prédéterminée,
- après l'ajustement (3110) de la taille : déterminer (3115, 3120) une estimation du nombre et/ou du degré de confluence des cellules sur la base de l'image de microscopie optique (91, 92), et
- utiliser un premier algorithme d'apprentissage automatique qui détermine un facteur de mise à l'échelle pour l'ajustement de la taille, au moyen d'une transformation d'image à scalaire sur la base de l'image de microscopie optique (91, 92).

5. Procédé mis en œuvre par ordinateur selon la revendication 4,
dans lequel le premier algorithme d'apprentissage automatique reçoit plusieurs extraits d'image de l'image de microscopie optique et dans lequel le facteur de mise à l'échelle est déterminé sur la base d'un moyennage par rapport aux multiples extraits d'image pour l'image de microscopie optique.

6. Procédé mis en œuvre par ordinateur selon la revendication 4 ou 5, comprenant en outre l'étape consistant à :
- effectuer un contrôle de plausibilité du facteur de mise à l'échelle associé à l'ajustement de la taille de l'image de microscopie optique.

7. Procédé mis en œuvre par ordinateur selon la revendication 6,
dans lequel le contrôle de plausibilité est effectué en fonction d'un niveau de confiance du facteur de mise à l'échelle.

8. Procédé mis en œuvre par ordinateur selon l'une quelconque des revendications précédentes,
dans lequel l'ajustement de la taille de l'image de microscopie optique est effectué en plusieurs itérations,
dans lequel l'ajustement de la taille de l'image de microscopie optique au cours des multiples itérations est effectué jusqu'à ce qu'un contrôle de plausibilité d'un facteur de mise à l'échelle associé à l'ajustement de la taille de l'image de microscopie optique soit réussi.

9. Procédé mis en œuvre par ordinateur selon l'une quelconque des revendications précédentes,
dans lequel la pluralité de cellules comprend plusieurs types de cellules présentant différentes tailles,
dans lequel l'ajustement de la taille de l'image de microscopie optique (91, 92) comprend en outre les étapes consistant à :
- pour chaque type de cellule : déterminer une instance associée de l'image de microscopie optique (91, 92) et ajuster la taille de l'instance respective de l'image de microscopie optique (91, 92) de sorte que la taille de la structure cellulaire prédéterminée pour le type de cellule respectif corresponde à la valeur de référence prédéterminée, ce qui permet d'obtenir une instance remise à l'échelle respective de l'image de microscopie optique (91, 92),
dans lequel la détermination de l'estimation du nombre et/ou du degré de confluence des cellules est effectuée sur la base des instances remises à l'échelle de l'image de microscopie optique.

10. Procédé mis en œuvre par ordinateur selon l'une quelconque des revendications précédentes,
dans lequel l'ajustement de la taille de l'image de microscopie optique et la détermination de l'estimation du nombre et/ou du degré de confluence des cellules sont mis en œuvre par un algorithme commun.

11. Procédé mis en œuvre par ordinateur selon l'une quelconque des revendications précédentes,
- délivrer, sur une interface utilisateur graphique, l'image de microscopie optique dans sa taille d'origine avant l'ajustement de la taille ainsi que délivrer l'estimation sous la forme d'une superposition de l'image de microscopie optique.

12. Dispositif comprenant un processeur qui est conçu pour effectuer les étapes suivantes :
- obtenir (3105) une image de microscopie optique (91, 92) représentant une pluralité de cellules,
- ajuster (3110) une taille de l'image de microscopie optique (91, 92) de sorte qu'une taille d'une structure cellulaire prédéterminée de la pluralité de cellules corresponde à une valeur de référence prédéterminée,
- déterminer (3115, 3120) une estimation du nombre et/ou du degré de confluence des cellules sur la base de l'image de microscopie optique (91, 92), et
- utiliser un premier algorithme d'apprentissage automatique qui ajuste, au moyen d'une transformation d'image à image sur la base de l'image de microscopie optique (91, 92), la taille de l'image de microscopie optique (91, 92).

13. Dispositif comprenant un processeur qui est conçu pour effectuer les étapes suivantes :
- obtenir (3105) une image de microscopie optique (91, 92) représentant une pluralité de cellules,
- ajuster (3110) une taille de l'image de microscopie optique (91, 92) de sorte qu'une taille d'une structure cellulaire prédéterminée de la pluralité de cellules corresponde à une valeur de référence prédéterminée,
- déterminer (3115, 3120) une estimation du nombre et/ou du degré de confluence des cellules sur la base de l'image de microscopie optique (91, 92), et
- utiliser un premier algorithme d'apprentissage automatique qui détermine un facteur de mise à l'échelle pour l'ajustement de la taille, au moyen d'une transformation d'image à scalaire sur la base de l'image de microscopie optique (91, 92).

14. Programme informatique comprenant un code de programme qui peut être chargé et exécuté par un processeur, dans lequel l'exécution du code de programme amène le processeur à mettre en œuvre un procédé selon l'une quelconque des revendications 1 à 11.
